# EUROPEAN PATENT SPECIFICATION

(11) **EP 4 263 192 B1**
(45) Date of publication and mention of the grant of the patent: **20.11.2024**
(21) Application number: 21839265.2
(22) Date of filing: 15.12.2021
(51) Int. Cl.: B29D 30/00, B29D 30/24, B29D 30/20

(54) **METHOD OF FEEDING A SEMI-FINISHED PRODUCT FOR THE ASSEMBLY OF A TYRE COMPONENT AND ITS FEEDING STATION**
VERFAHREN ZUM ZUFÜHREN EINES HALBZEUGS ZUR MONTAGE EINER REIFENKOMPONENTE UND SEINE ZUFÜHRSTATION
PROCÉDÉ D'ALIMENTATION EN PRODUIT SEMI-FINI POUR L'ASSEMBLAGE D'UN ÉLÉMENT DE PNEUMATIQUE ET SON POSTE D'ALIMENTATION

(30) Priority: 17.12.2020 IT 202000031262
(43) Date of publication of application: 25.10.2023
(73) Proprietor: Pirelli Tyre S.p.A., 20126 Milano (IT)
(72) Inventor: CONTI, Davide, 20126 Milano (IT); CARMINATI, Mattia, 20051 Cassina De' Pecchi (MI) (IT)
(74) Representative: Vittorangeli, Lucia
(86) International application number: PCT/IB2021/061749
(87) International publication number: WO 2022/130227

(56) References cited:
- EP-A1- 0 555 813
- WO-A1-2013/011396
- WO-A1-2014/155240

## Description

The present invention relates to a method for feeding a semi-finished product for building a component of a tyre and a relative feeding station.

The present invention also relates to a method and a plant for building tyres for vehicle wheels.

A tyre for vehicle wheels generally comprises a carcass structure comprising at least one carcass ply having respectively opposite end flaps engaged with respective anchoring annular structures, integrated in the zones normally identified with the name "beads", having an inner diameter substantially corresponding to a so-called "fitting diameter" of the tyre on a respective mounting rim.

The carcass structure is associated with a belt structure which can comprise one or more belt layers, situated in radial superimposition with respect to each other and with respect to the carcass ply, having metallic or textile reinforcement cords with cross orientation and/or substantially parallel to the circumferential extension direction of the tyre (layer at zero degrees). In radially outer position with respect to the belt structure, a tread band is applied, made of elastomeric material like other constituent components of the tyre.

Respective sidewalls made of elastomeric material are also applied in axially external position on the lateral surfaces of the carcass structure, each extended from one of the lateral edges of the tread band up to the respective anchoring annular structure at the beads.

Following the building of the green tyre actuated through assembly of respective components, a moulding and vulcanisation treatment is generally carried out that is aimed to determine the structural stabilisation of the tyre through crosslinking of the elastomeric compositions as well as imparting on the same, if requested, a desired tread design and possible distinctive graphic marks at the sidewalls of the tyre.

With the term "elastomeric material" it is intended a composition comprising at least one elastomeric polymer and at least one reinforcement filler. Preferably, such composition also comprises additives such as, for example, a crosslinking agent and/or a plasticiser. Due to the presence of the crosslinking agent, through heating such material can be crosslinked, so as to form the final manufactured product.

With the term "semi-finished product" it is intended a tape-like element made of elastomeric material possibly comprising other elements such as cords, reinforcements, sealing material, etc., previously made and preferably having width equal to the width of the component to be attained and possibly previously cut into length segments equal to the circumference of the component to be attained. The semi-finished product is adapted to be wound in turns on a dispensing reel.

With the term "service tape" it is intended an elongated tape-like element adapted to be wound in turns and made with material and structure such to divide and possibly sustain turns of semi-finished product. The service tape can be simple, i.e. made as a substantially two-dimensional layer (except for the thickness of the layer itself), or it can be structured, i.e. made as a three-dimensional structure having a substantially two-dimensional layer associated with lateral support shoulders which, when the service tape is wound in turns, are abutted against the underlying turn and define a containment volume of a turn of semi-finished product.

With the term "reel" it is intended a cylindrical support possibly provided with two lateral containment flanges having diameter related to the length of the semi-finished product and/or of the service tape.

With the term "axial middle line plane" of the reel it is intended a plane perpendicular to the cylindrical support and equidistant from the axially outer portions of the reel, in particular from the lateral containment flanges, if present.

With the term "dispensing reel" it is intended a reel adapted to receive a semi-finished product and at least one service tape wound such that a turn of service tape is radially interposed between two consecutive turns of semi-finished product, with possible interposition of further service tapes if necessary.

With the term "full dispensing reel" it is intended the service reel comprising at least one length of semi-finished product and the service tape wound around the winding axis thereof such that, in a radial sequence, a turn of service tape is radially interposed between two consecutive turns of semi-finished product, with possible interposition of further service tapes if necessary.

With the term "empty dispensing reel" it is intended the service reel from which, in a preceding feeding procedure, the entire length of the semi-finished product has been dispensed and possibly comprising the service tape rewound following a preceding feeding procedure.

The expression "dispensing reel being replaced" is intended applicable both to the full dispensing reel and to the empty dispensing reel.

With the term "feeding procedure" it is intended a sequence of actions following which the semi-finished product is made available to an apparatus for dispensing a semi-finished product. With the term "loading/unloading procedure" it is intended a sequence of actions following which an empty dispensing reel is substituted with a full dispensing reel.

With the term "service reel" it is intended a reel adapted to receive a service tape wound in turns.

With the term "carcass structure" it is intended a set having at least one carcass ply and a pair of anchoring annular structures. In addition, provision can be made for one or more from among the following: a self-sealing layer, liner, under-liner, anti-abrasive inserts, reinforcements, complex (the set of liner, under-liner and anti-abrasive inserts), at least one portion of the sidewalls (or the sidewalls themselves).

With the term "carcass portion" it is intended a subset of the carcass structure having at least one carcass ply and preferably corresponding to the carcass structure lacking the pair of anchoring annular structures.

With the term "crown structure" it is intended a set having at least one belt structure comprising at least one belt layer and one tread band. In addition, provision can be for one or more of the following: under-belt inserts, reinforcements, at least one portion of the sidewalls (or the sidewalls themselves) if not already provided for in the carcass structure.

With the term "tyre being processed" it is intended a set of one or more parts of the green tyre built on a forming support or drum.

With the term "control unit" it is intended a logic set of one or more control units.

WO2014/011033 describes an apparatus which can operate alternatively in winding mode, as winding apparatus on reels for storing a material used for building tyres, or in unwinding mode, as apparatus for unwinding a material used for building tyres from storage reels.

The apparatus comprises a first station and a second station, each adapted to receive a storage reel and a service material reel.

With reference to the unwinding mode, the unwinding apparatus has an unwinding section in which the service material and the building material are unwound from the storage reel and separated. The service material separated from the building material is wound on the reel of the service material.

The first station is translatable alternatively between a first management section and the unwinding section. In addition, the second station is translatable alternatively between the unwinding section and a second management section. The unwinding section is situated between the first management section and the second management section.

With reference to the unwinding mode, in a management section, a "full" reel of the service material and an "empty" storage reel are unloaded from the respective section. Subsequently, an "empty" reel of the service material and a "full" storage reel are subsequently loaded onto the respective station.

The document WO2013/011396 describes a building plant in which a forming drum is loaded onto a shuttle movable on a guide along a deposition line. The shuttle is moved on the guide in the two travel senses in order to be carried to one or more stations for dispensing semi-finished products arranged side-by-side along the guide. At each of the dispensing stations, at least one semi-finished product is deposited on a surface radially external to the forming drum in order to form at least one component of a tyre.

JP2006110904 describes a device for unwinding and rewinding the service material with which an element for building a tyre is wound, in particular an element of a belt, for example a tread element. A first step provides for the unwinding and the separation of the building element and of the service material initially wound on a first reel. The service material is wound on a second reel and subsequently rewound on the first reel.

The Applicant has observed that the apparatus described in the document WO2014/011033 is bulky both in width, since it requires the presence of three sections through which the stations are translated through, and in length, since it provides that the storage reel and the service material reel are aligned along such direction.

In addition, the Applicant has observed that the apparatus described in the document WO2014/011033 provides for an access on two opposite sides corresponding respectively to the first and to the second management section. This arrangement of the accesses increases the overall dimensions thereof, since it requires further manoeuvring space, and obliges the operator to alternate himself/herself between two opposite zones, together with the reels that he/she is managing during loading and unloading, limiting the ergonomics of the entire plant.

The Applicant has perceived that the overall dimensions and the configuration of the feeding apparatus described in the document WO2014/011033 would be further disadvantageous in the case of an application thereof for example in a plant for building tyres of the type, described for example in the document WO2013/011396 which, due to compactness, versatility and speed of building, constitutes a valid selection in particular in the case of batches with a limited number of tyres intended for high or medium-high performances.

Indeed, the possible use of the feeding apparatus provided for in the document WO2014/011033 at one of the stations for dispensing semi-finished products arranged side-by-side along the deposition line as described in the document WO2013/011396, would require reserving for the feeding apparatus a space with width equal to at least three times the width of the dispensing station itself and hence would require increasing the distance with respect to the adjacent dispensing stations. An increase of the length of the deposition line would follow, i.e. of the travel of the shuttle that carries the forming drum, and hence an increase of the cycle time.

The Applicant has also observed that the document JP2006110904 does not add further information with regard to the overall dimensions of the first reel and of the second reel, hence not resolving the limitations illustrated for the use of an apparatus of the type described in the document WO2014/011033.

In addition, the Applicant has observed that the unwinding device described in the document JP2006110904 would be even bulkier in the event in which the second reel had dimensions analogous to those of the first reel, as it is necessary to provide for structured service tape adapted to space and support each turn of the building element.

The Applicant has perceived that a different structural and/or geometric arrangement of the various elements discussed such to generate compact use configurations could effectively resolve problems of overall dimensions and simplicity of use by operators.

The Applicant has finally found that the configuration of the feeding station as a rotating carousel, subdivided into two operating units, allows limiting the overall dimensions and generally improving the ergonomics of the plant in use by providing for only one access for carrying out the loading/unloading operations.

In accordance with a first aspect, the present invention relates to a method for feeding a semi-finished product for building a component of a tyre.

Preferably provision is made for arranging a carousel rotating around an axis arranged centrally between a work station and a loading/unloading station.

Preferably said carousel is divided into two operating units such that while one operating unit is arranged in the work station the other operating unit is arranged in the loading/unloading station. Preferably each operating unit comprises a dispensing reel and a service reel rotatable around respective mounting axes. Preferably provision is made for carrying out, at least partially simultaneously, a feeding procedure in the operating unit located in the work station and a loading/unloading procedure in the operating unit located in the loading/unloading station. Preferably, at the end of the feeding procedure and of the loading/unloading procedure, provision is made for rotating said carousel around said axis so as to reverse the position of said two operating units.

Preferably, at the end of the rotation, provision is made for repeating the feeding procedure in the operating unit located in the work station and the loading/unloading procedure in the operating unit located in the loading/unloading station.

In accordance with a second aspect the present invention relates to a method for building tyres for vehicle wheels.

Preferably provision is made for arranging a plurality of building stations and a plurality of drums.

Preferably provision is made for moving each drum of said plurality of drums between at least several building stations of said plurality of building stations.

Preferably provision is made for carrying out, in each building station, a processing on a tyre being processed associated with a drum of said plurality of drums up to completion of the tyre. Preferably at least one processing comprises feeding a semi-finished product according to the first aspect of the invention and depositing a semi-finished product on a surface radially external to the drum at at least one forming station of said plurality of building stations.

In accordance with a third aspect, the present invention relates to a feeding station for building a component of a tyre.

Preferably a carousel is provided, rotating around an axis arranged centrally between a work station and a loading/unloading station of the feeding station.

Preferably said carousel is divided into two operating units such that while one operating unit is arranged in the work station the other operating unit is arranged in the loading/unloading station. Preferably each operating unit comprises a dispensing reel and a service reel rotatable around respective mounting axes. Preferably a control unit is provided that is programmed for:
- carrying out a feeding procedure in the operating unit located in the work station and a loading/unloading procedure in the operating unit located in the loading/unloading station,
- at the end of the feeding procedure and of the loading/unloading procedure, rotating said carousel around said axis so as to reverse the positions of said two operating units and, at the end of the rotation, repeating the feeding procedure in the operating unit located in the work station and the loading/unloading procedure in the operating unit located in the loading/unloading station.

In accordance with a fourth aspect the present invention relates to a plant for building tyres for vehicle wheels.

Preferably provision is made for a plurality of building stations and a plurality of drums, in which each drum of said plurality of drums is movable between at least several building stations of said plurality of building stations.

Preferably said plurality of building stations comprises at least one forming station configured for forming a component of the tyre.

Preferably said at least one forming station comprises a feeding station according to the third aspect of the invention and a dispensing apparatus with which said station for feeding a semi-finished product is operatively associated.

Preferably said dispensing apparatus is configured for receiving a semi-finished product from the feeding station and for depositing said semi-finished product on a surface radially external to a drum of said plurality of drums in order to form said component of the tyre.

The Applicant deems that providing for a carousel rotating divided into two operating units limits the overall dimensions and improves the ergonomics of the entire plant, stably defining the position of the loading/unloading station, also simplifying the activity of the operators.

In one or more of the indicated aspects, the present invention can comprise one or more of the following characteristics.

Preferably said feeding procedure comprises unwinding from the full dispensing reel a semi-finished product and a service tape, said semi-finished product and said service tape being wound on the dispensing reel such that a turn of service tape is radially interposed between two consecutive turns of semi-finished product.

Preferably said feeding procedure comprises separating the semi-finished product being unwound from the service tape being unwound.

Preferably said feeding procedure comprises directing the semi-finished product separated from the service tape along a feeding path until the semi-finished product wound on said dispensing reel is exhausted.

Preferably said feeding procedure comprises accumulating the service tape separated from the semi-finished product by winding it on the service reel until the semi-finished product wound on said dispensing reel is exhausted.

Preferably said loading/unloading procedure comprises unloading, from the operating unit located in the loading/unloading station, a service tape separated from the semi-finished product in a preceding feeding procedure carried out when the operating unit was situated in the work station. Preferably said loading/unloading procedure comprises unloading from the operating unit located in the loading/unloading station an empty dispensing reel, following a preceding feeding procedure carried out when the operating unit is situated in the work station.

Preferably said loading/unloading procedure comprises loading, in the operating unit located in the loading/unloading station, a full dispensing reel around which a semi-finished product is wound with interposition of a service tape so that a turn of service tape is radially interposed between two consecutive turns of semi-finished product.

Preferably provision is made for directing the semi-finished product separated from the service tape along the feeding path through a sector of the operating unit which, when the operating unit is arranged in the loading/unloading station, corresponds to a loading/unloading sector of the dispensing reel being replaced. The Applicant deems that by using same sector of the operating unit both for the loading/unloading operations of the dispensing reel and for the feeding of the semi-finished product, it is possible to increase the compactness of the carousel and the reliability of the positioning.

Preferably said axis is vertical.

Preferably the work and loading/unloading stations define a fixed area with respect to an absolute reference system, preferably with respect to a dispensing apparatus.

Preferably, at the end of the feeding procedure, provision is made for rewinding on said empty dispensing reel the accumulated service tape.

The Applicant deems that the rewinding of the accumulated service tape allows simplifying the operations in particular of loading/unloading and of providing a variety of structural and/or geometric arrangements including selecting those more compact for effectively resolving problems of overall dimensions, simplicity of use by operators and inertia reduction in the movement of the feeding station.

Preferably the rewinding on said empty dispensing reel of the accumulated service tape is carried out at least partially in the work station.

Preferably the rewinding on said empty dispensing reel of the accumulated service tape is carried out at least partially during the rotation of the carousel around the axis to reverse the position of the operating units.

Preferably the rewinding on said empty dispensing reel of the accumulated service tape is carried out at least partially when the operating unit reaches the loading/unloading station.

The Applicant deems that the carousel and the relative rotary movement allow an effective synergy with the rewinding of the accumulated service tape, allowing a multiplicity of possibilities such to increase the flexibility of the plant.

Preferably said loading/unloading procedure comprises unloading, from the operating unit, said empty dispensing reel around which the service tape separated from the semi-finished product was rewound in a preceding feeding procedure, carried out when the operating unit was situated in the work station.

The Applicant deems that the rewinding of the service tape on the dispensing reel improves the ergonomics of the feeding station and simplifies the manual operations in particular in the case of large-size reels.

Preferably said service reel is stably associated with said carousel.

The Applicant deems that by maintaining the service reel stably associated with the carousel, the manual operations can be simplified in particular in the case of large-size reels since the service reel does not require replacement. The latter aspect also affects the design selections since - not having to replace the service reel - it is possible to select its position only for the purpose of compacting the carousel and rendering it adaptable to a plant with side-by-side building stations.

Preferably unwinding said semi-finished product and said service tape from said dispensing reel comprises imposing a said dispensing reel a dispensing rotation around its own mounting axis.

Preferably rewinding on said dispensing reel said accumulated service tape comprises imposing a said dispensing reel a rewinding rotation contrary to the dispensing rotation.

The Applicant deems that the rotation of the dispensing reel allows an effective control on the unwinding of the semi-finished product and of the service tape and on the rewinding of the service tape.

Preferably accumulating said service tape comprises imposing a winding rotation on said service reel, around a mounting axis thereof. Preferably rewinding said accumulated service tape on said dispensing reel comprises imposing, on said service reel, an unwinding rotation contrary to the winding rotation.

The Applicant deems that the rotation of the service reel allows an effective control on the winding and on the rewinding of the service tape.

Preferably, the unwinding rotation of the service reel contrasts with the rewinding rotation of the dispensing reel.

Preferably, the winding rotation of the service reel contrasts with the dispensing rotation of the dispensing reel.

Preferably provision is made for monitoring the length of accumulated service tape on the service reel during the winding rotation, recording an overall length of accumulated service tape at the end of the winding rotation, monitoring the length of service tape rewound on the dispensing reel during the rewinding rotation, stopping the rewinding rotation upon reaching said overall length of service tape on said dispensing reel.

The Applicant deems that stopping the rewinding of the service tape based on the monitoring of the length of accumulated service tape allows effectively managing the feeding station also in the event in which the dispensing reels different from each other, for example for the length of semi-finished product and/or of service tape.

Preferably provision is made for a dispensing motorisation operatively associated with the dispensing reel and a service motorisation operatively associated with the service reel. Preferably said control unit is programmed for actuating said dispensing motorisation while said service motorisation operates as control brake during the rewinding rotation at the dispensing reel and the unwinding rotation of the service reel.

Preferably said control unit is programmed for actuating said service motorisation while said dispensing motorisation operates as control brake during the dispensing rotation of the dispensing reel and the winding rotation of the service reel.

Preferably said rewinding rotation of the dispensing reel and said unwinding rotation of the service reel are generated from a dispensing motorisation operatively associated with the dispensing reel while a service motorisation operatively associated with the service reel operates as control brake. Preferably said dispensing rotation of the dispensing reel and said winding rotation of the service reel are generated by a service motorisation operatively associated with the service reel while a dispensing motorisation operatively associated with the dispensing reel operates as control brake.

The Applicant deems that the double motorisation and the relative management of the pairs allows a high control of the tensions in particular of the service tape.

Preferably accumulating said service tape comprises directing said service tape along a drawing-in path which partially surrounds said dispensing reel.

Preferably each operating unit is configured so as to define a separation point between the semi-finished product and the service tape.

Preferably provision is made for a plurality of deflections defining a drawing-in path of the service tape arranged between a separation point between the semi-finished product and the service tape and the service reel.

Preferably said drawing-in path partially surrounds said dispensing reel.

The Applicant deems that the arrangement of the reels and of the path followed by the service tape allows an improved distribution and use of the spaces with reduction of the overall dimensions and of the inertia following the rotation of the carousel.

Preferably said drawing-in path circumferentially surrounds at least one portion of said dispensing reel.

Preferably said plurality of deflections is arranged such that said drawing-in path circumferentially surrounds at least one portion of said dispensing reel.

Preferably said drawing-in path surrounds said dispensing reel on the lower part and laterally.

Preferably said plurality of deflections is arranged such that said drawing-in path surrounds said dispensing reel on the lower part and laterally.

Preferably said plurality of deflections is arranged such that said drawing-in path surrounds said dispensing reel from circumferentially opposite side with respect to a loading/unloading sector of the dispensing reel.

The Applicant deems that using nearly all the space around the dispensing reel, except for the sector used for replacing the dispensing reel, allows optimising the spaces.

Preferably a driving segment is provided for, having a first free end and a second end stably associated with the service reel. Preferably said first free end is adapted to be connected to a first free end of the service tape in order to guide it along said drawing-in path.

Preferably accumulating the service tape separated from the semi-finished product comprises connecting a first free end of the service tape to a first free end of a driving segment having a second end stably associated with the service reel.

Preferably accumulating the service tape separated from the semi-finished product comprises winding, on the service reel, said driving segment and, then, said service tape.

Preferably said first end of the service tape is guided along said drawing-in path by said driving segment.

The Applicant deems that the use of a driving segment simplifies the manual operations and increases the safety of the operator. In addition, the connection between the service tape and the driving segment is reliable and intuitive, being arranged at the ends of two tapes. Finally, the presence of a driving segment frees the structural/geometric arrangement of the carousel from having to make the service reel accessible, which can thus be arranged in the optimal position for an improved compactness and for limiting the rotation inertia.

Preferably accumulating said service tape comprises directing said service tape along a drawing-in path at least partially contrary to a feeding path of the semi-finished product. Preferably said plurality of deflections is arranged such that said drawing-in path is at least partially contrary to a feeding path of the semi-finished product.

The Applicant deems that by reversing the path of the service tape with respect to the path of the semi-finished product, it is possible to use the same sector of the operating unit both for the loading/unloading operations of the dispensing reel and for feeding the semi-finished product. In other words, the dispensing reel can be replaced from the same side of the carousel which, in the work station, faces the dispensing apparatus.

Preferably provision is made for monitoring and controlling the tension of the service tape while it is wound on the service reel. Preferably provision is made for monitoring and controlling the tension of the service tape while it is rewound on the dispensing reel.

Preferably said plurality of deflections comprises at least one transmission dancer associated with a tension sensor for monitoring and controlling the tension of the service tape separated from the semi-finished product.

The Applicant deems that such aspect allows maintaining the correct degree of tension, so as to not overly stress the service tape or leave it loose.

Preferably the transmission dancer is movable between an active position in which it operates as deflection and a passive position in which it allows the loading/unloading of the dispensing reel. Preferably provision is made for building a carcass structure in a first step building line and building a crown structure in a second step building line.

Preferably provision is made for feeding said semi-finished product in at least one forming station of said first step building line.

Preferably provision is made for applying said method for feeding a semi-finished product for building a component of a tyre according to the first aspect of the invention to the building of a component of a carcass portion, still more preferably of a self-sealing layer.

Preferably said forming station is configured for forming a component of a carcass portion, still more preferably a self-sealing layer.

Preferably said dispensing reel and said service reel have, in use, a respective maximum overall diameter.

Preferably the respective mounting axes are arranged such that the overall dimensions of the operating unit perpendicular to the axis is less than the sum of the maximum overall diameters of said service reel and of said dispensing reel.

The Applicant deems that such arrangement generates a use configuration that is compact and easy to move.

Preferably the respective mounting axes of the dispensing reel and of the service reel are aligned along the axis or slightly offset perpendicular to the axis.

Preferably said dispensing reel and said service reel have, in use, a respective maximum overall radius. Preferably a distance between the two mounting axes according to a direction perpendicular to the axis is less than each maximum overall radius.

Preferably said dispensing reel and said service reel have, in use, a respective maximum overall radius.

Preferably the respective mounting axes of the dispensing reel and of the service reel are arranged such that the projection of the distance between the two mounting axes on a plane containing the mounting axis of the service reel and perpendicular to the axis is smaller than each maximum overall radius.

Preferably said service reel and said dispensing reel have, in use, a respective maximum overall radius.

Preferably at least said maximum overall radius of the service reel corresponds to a maximum radius of the service tape wound on the service reel.

Preferably the distance between respective mounting axes of the service reel and of the dispensing reel is smaller than the sum of the respective maximum overall radii.

Preferably the segment corresponding to the distance between the respective mounting axes of the service reel and of the dispensing reel is tilted with respect to the axis by an angle comprised between 0° and 30°.

Preferably the respective mounting axes of said dispensing reel and of said service reel are arranged consecutively along a direction defined by said axis.

Preferably said axis is vertical.

Preferably the mounting axis of the service reel is arranged above the mounting axis of the dispensing reel.

The Applicant deems that a vertical arrangement of the reels renders the carousel compact and hence easily adaptable to a plant with side-by-side stations.

Preferably said dispensing reel is removable from said carousel. Preferably said loading/unloading station has a track configured for allowing the rotation-translation of the dispensing reel being replaced perpendicular to the winding axis thereof.

Preferably at least the track is arranged at the level of an upper surface of the floor outside the feeding station.

Preferably provision is made for a base on which the carousel is mounted.

Preferably the base can be at least partially lowered with respect to an upper surface of a floor outside the feeding station.

Preferably the carousel comprises a base and a support framework.

Preferably the track comprises a fixed portion associated with a base and a movable portion associated with each operating unit and made in the base.

Preferably each operating unit has a loading/unloading sector through which the dispensing reel is replaced when the operating unit is situated in the loading/unloading station.

Preferably said loading/unloading sector corresponds, when the operating unit is arranged in the work station, to the sector through which the semi-finished product is fed and which is traversed by a feeding path of the semi-finished product. Preferably said forming station is a building station of a first step building line.

Further characteristics and advantages will be clearer from the detailed description of a preferred but not exclusive embodiment of a feeding station and a plant for building tyres for vehicle wheels where a method can be applied for feeding a semi-finished product for building a component of a tyre and a method for building tyres for vehicle wheels.

Such description will be set forth hereinbelow with reference to the enclosed drawings, provided only a non-limiting example, in which:
- figure 1 schematically shows in a plan view a plant for building tyres for vehicle wheels according to the present invention;
- figure 2 shows a radial half-section of a tyre built with the plant of figure 1;
- figure 3 schematically shows a side elevation view of a forming station of the plant of figure 1;
- figure 4 shows a portion of an embodiment variant of the forming station of figure 3;
- figures 5 and 6 schematically show perspective views according to different angles of a feeding station according to the invention;
   figures 7 and 8 schematically show side elevation views according to different angles of the feeding station of figure 5 or 6;
- figures 9 and 10 schematically show side elevation views according to different angles of a feeding station of figure 5 or 6;
- figure 11 schematically shows, in a plan view, a forming station of the plant of figure 1;
- figures 12-18 schematically show different operating conditions of an operating unit of the feeding station of figure 5 or 6.

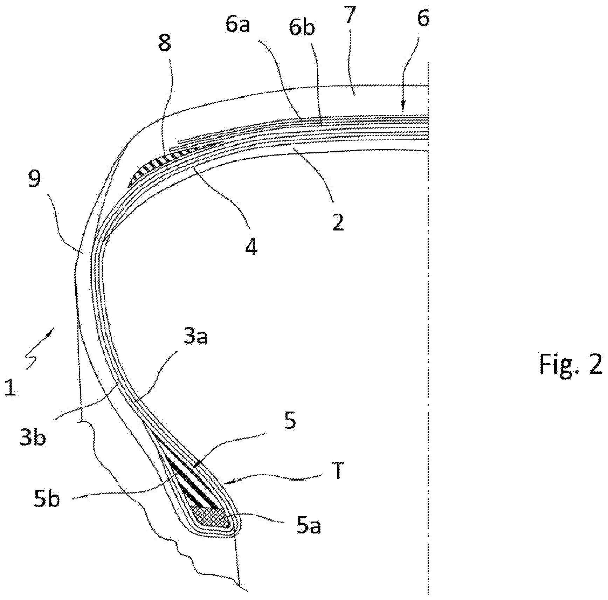

With reference to the figure 2, reference number 1 indicates tyre in accordance with one possible embodiment.

The tyre 1 comprises a carcass structure comprising a self-sealing layer 2 and one or more carcass plies, for example at least one first carcass ply 3a and a second carcass ply 3b. Preferably a layer of impermeable elastomeric material or so-called liner 4 is applied inside the carcass ply/plies. Two anchoring annular structures 5, each comprising a so-called bead core 5a carrying an elastomeric filler 5b in radially outer position, are engaged with respective end flaps of the carcass ply/plies. The anchoring annular structures 5 are integrated in proximity to zones normally identified with the name beads "T", at which the engagement between the tyre 1 and a respective mounting rim takes place. A belt structure 6 comprising multiple belt layers (for example at least one first belt layer 6a and a second belt layer 6b) is circumferentially applied around the carcass ply/plies, and a tread band 7 is circumferentially superimposed on the belt structure 6, overall forming a crown structure. So-called "under-belt inserts" 8 can be situated, each between the carcass ply/plies and one of the axially opposite terminal edges of the belt structure 6. Two sidewalls 9, each extended from the corresponding bead "T" to a corresponding lateral edge of the tread band 7, are applied in laterally opposite positions on the carcass ply/plies.

Further non-illustrated elements can also be possibly provided for, for example belt layer at 0 degrees, under-liner, anti-abrasive inserts, reinforcements, etc.

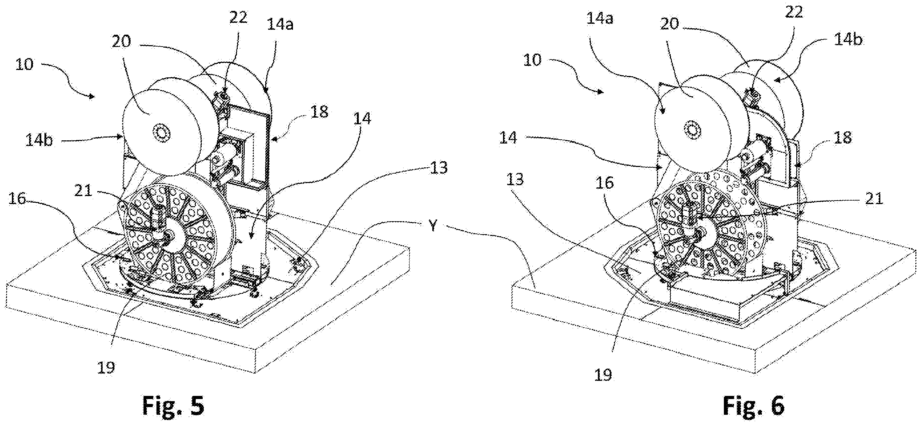

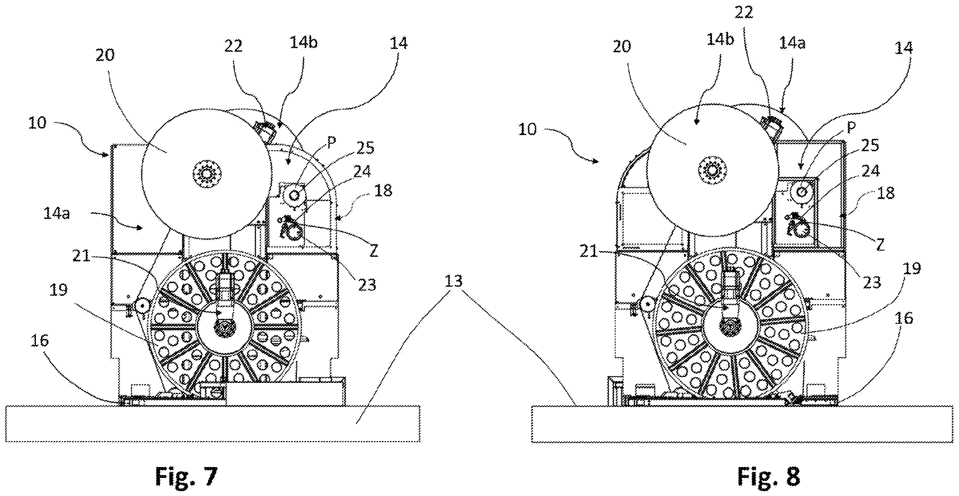

With reference to figures 5-11, reference number 10 overall indicates a feeding station configured for feeding a semi-finished product for forming a tyre component.

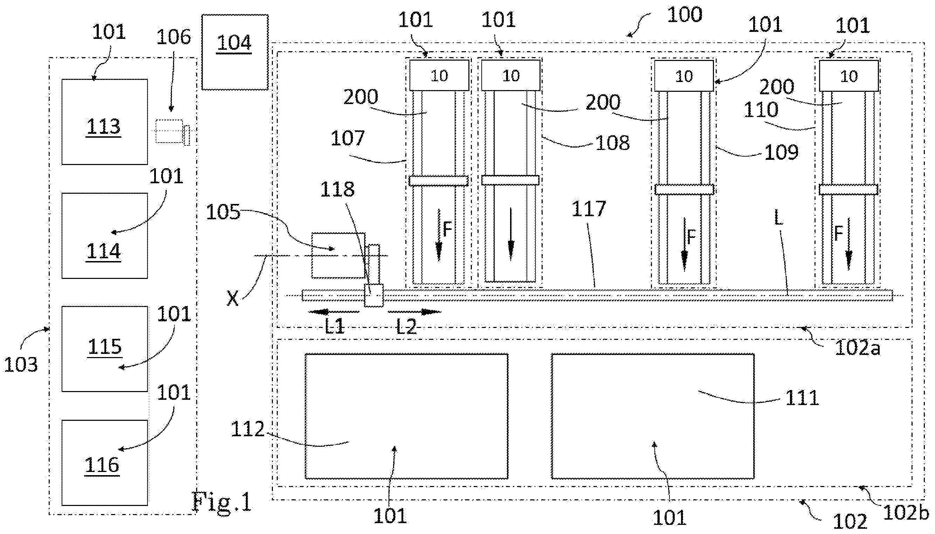

The feeding station 10 preferably has application in a plant 100 for building tyres for vehicle wheels, for example illustrated in figure 1. As will be subsequently described, the plant 100 comprises a plurality of building stations 101 in which each building station is configured for carrying out a processing on a tyre being processed. For example, a forming station of the plurality of building stations 101 is a station in which a component of the tyre is formed. The feeding station 10 preferably has application in a forming station comprising a dispensing apparatus 200 configured for depositing a semi-finished product "S" on a surface radially external to a drum in order to a component of the tyre.

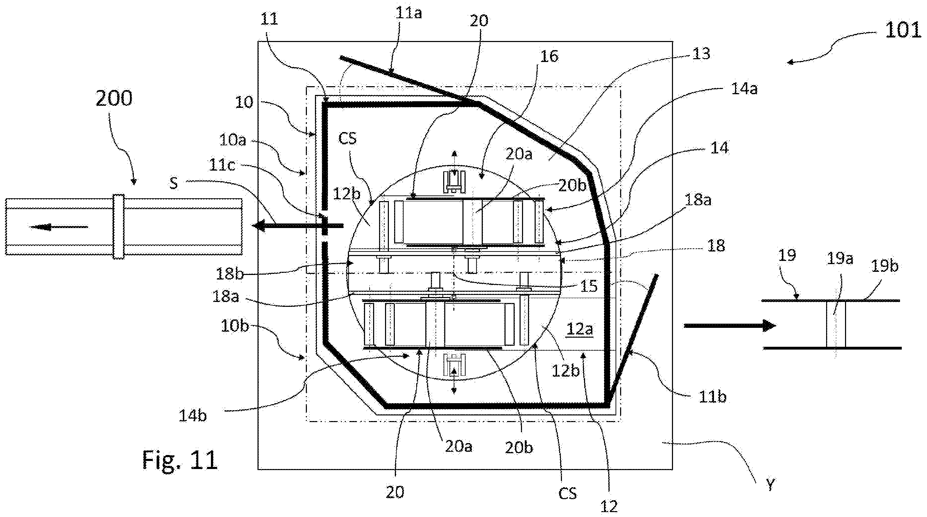

As illustrated in figure 11, the feeding station 10 is preferably delimited by a safety perimeter 11 attained for example by panels that are at least partially openable and/or lines of optical demarcation that are at least partially deactivatable.

The feeding station 10 has a work station 10a and a loading/unloading station 10b (figure 11). Both stations define an area that is fixed with respect to an absolute reference system, in particular to the dispensing apparatus 200 associated with the feeding station 10 and illustrated by way of example in figure 11.

A first access 11a, e.g. a first port of the safety perimeter 11, allows the access to the work station 10a and a second access 11b, e.g. a second port of the safety perimeter 11, allows the access to the loading/unloading station 10b.

The work station 10a is adapted to be placed in communication with the dispensing apparatus 200 associated with the feeding station 10 in order to allow feeding the semi-finished product "S". Preferably the safety perimeter 11 has at least one passage 11c, e.g. an opening of the safety perimeter 11, in order to allow feeding the semi-finished product "S" from the feeding station 10 to the dispensing apparatus 200.

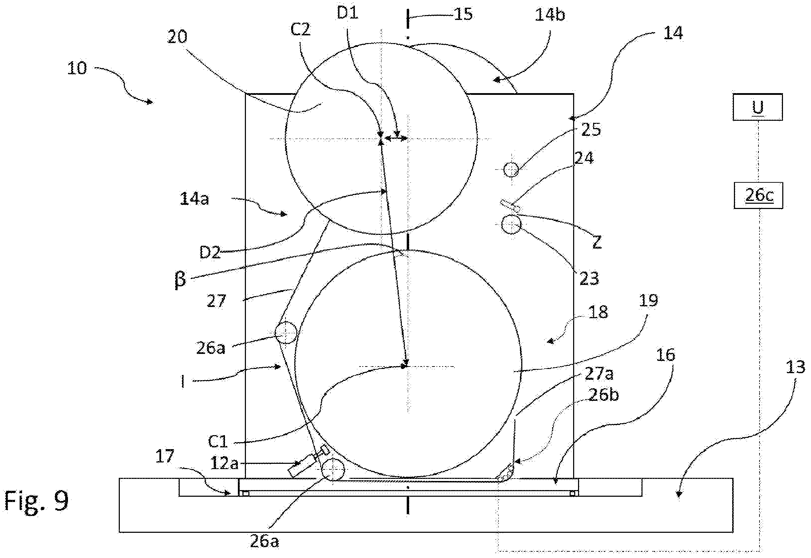

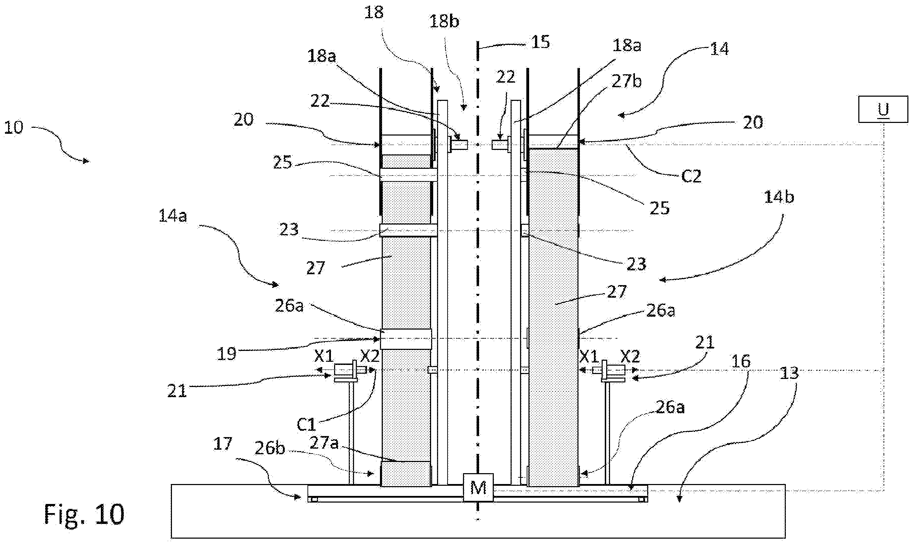

The loading/unloading station 10b has at least one track 12 (figure 11) that terminates at the second access 11b whose function will be described in the following present description. The feeding station 10 comprises a base 13 (figures 5-11), on which a carousel 14 is mounted that is rotating around an axis 15 (figures 9-11) arranged centrally between the work station 10a and the loading/unloading station 10b. With M, a primary motorisation (figure 10) has been indicated, which is configured for rotating the carousel 14 around the axis 15.

Preferably, as is for example illustrated in the enclosed figures, the axis 15 is vertical.

The base 13 can be at least partially lowered with respect to an upper surface "Y" of a floor outside the feeding station 10 (figures 5, 6, 11). At least the track 12, if present, is arranged preferably at the level of the upper surface "Y" of the floor outside the feeding station 10.

Preferably the carousel 14 comprises a base 16 perpendicular to the axis 15 and mounted on the base 13 with interposition of bearings 17 or analogous means in order to allow the rotation of the base 16 and hence of the carousel 14 on the base 13.

The carousel 14 is divided into two operating units 14a and 14b.

If the loading/unloading station 10b has the track 12, the latter comprises a fixed portion 12a associated with the base 13 and a movable portion 12b associated with each operating unit 14a, 14b and made in the base 16 (figure 11).

Preferably the carousel 14 comprises a support framework 18 mounted on the base 16 and extended perpendicular therefrom along the direction of the axis 15, at the axis itself. The support framework 18 is for example made by two panels 18a which delimit at least one service space 18b (figures 10-11) comprising the axis 15.

The two operating units 14a and 14b are arranged on diametrically opposite sides with respect to the axis 15 such that, when an operating unit is arranged in the work station 10a, the other operating unit is arranged in the loading/unloading station 10b. In addition, the arrangement of the two operating units 14a and 14b is such that, following a 180° rotation of the carousel 14 around the axis 15, the positions of the two operating units 14a and 14b are reversed.

The support framework 18 is preferably shared between the two operating units 14a and 14b. For example, an operating unit 14a comprises one of the two panels 18a and the other operating unit 14b comprises the other panel 18a.

The two operating units 14a, 14b are substantially identical so that, when not otherwise specified, the following description will refer to any one between the two operating units 14a, 14b.

The operating unit comprises a dispensing reel 19 and a service reel 20 rotatable around respective mounting axes C1, C2 that are parallel to each other. Preferably the dispensing reel 19 and the service reel 20 are rotatable on the support framework 18 and in particular on the respective panel 18a.

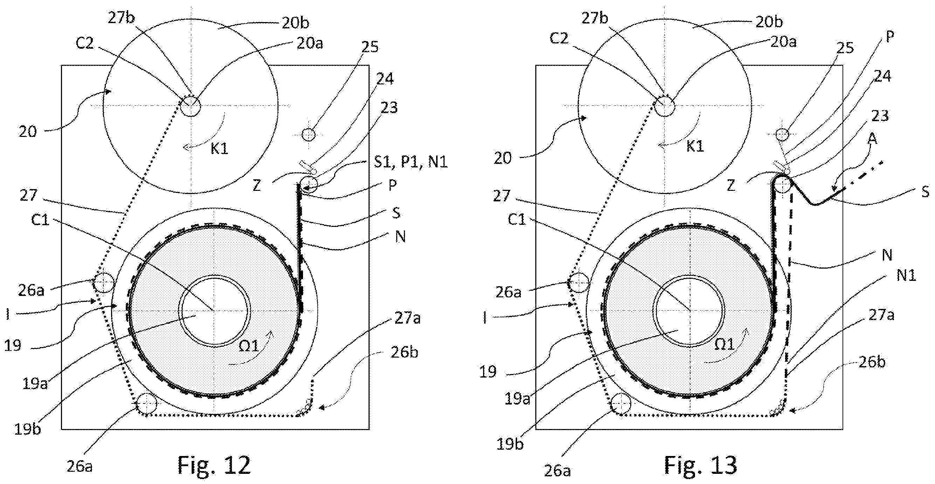

Preferably the dispensing reel 19 and the service reel 20 comprise a respective cylindrical support 19a, 20a defining a winding axis of the reel itself, arranged coaxial with the respective mounting axis C1, C2. Possibly the cylindrical support 19a, 20a is provided with respective two lateral containment flanges 19b, 20b (figures 12-18).

The dispensing reel 19 is adapted to receive a semi-finished product "S" and a service tape "N" wound around the winding axis thereof such that, in a radial sequence, a turn of service tape "N" is radially interposed between two consecutive turns of semi-finished product "S". Figures 12, 13 and 17 schematically show a "full" service reel 19, i.e. comprising a length of semi-finished product "S", in which a final turn of the set comprising the service tape "N" (dashed line) and the semi-finished product "S" (solid line) has been illustrated in detail. In some cases, for example in the event in which the semi-finished product "S" is formed of self-sealing material for the formation of a self-sealing layer of the tyre, a further service tape "P" can be provided, e.g. a film, wound such that, in radial sequence, the following are repeated: a turn of service tape "N" (dashed line), a turn of semi-finished product "S" (solid line) and a turn of the further service tape "P" (thin solid line).

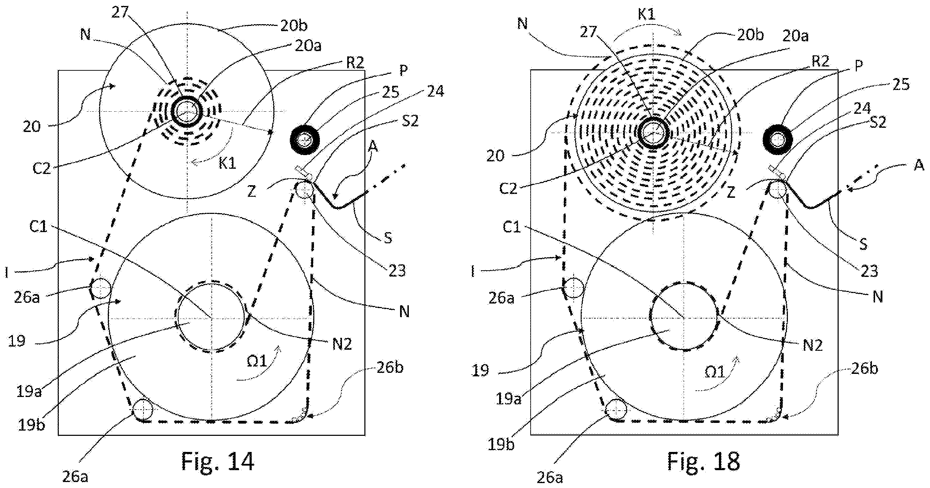

The semi-finished product "S" wound on a "full" dispensing reel 19 has a first free end S1 (figure 12) from which the unwinding initiates and a second free end S2 (figures 14 and 18) which is moved away from the dispensing reel 19 when the entire length of the semi-finished product "S" has been dispensed.

At the first free end S1 of the semi-finished product "S", also the service tape "N" and, if present, the further service tape "P" have a respective first free end N1, P1. Preferably the service tape "N" has a second end N2 integral with the dispensing reel 19, e.g. with the cylindrical support 19a (figures 14 and 18). In addition, the length of service tape "N" wound on the dispensing reel 19 is preferably greater than the length of semi-finished product "S". Preferably the further service tape "P" has a second free end (not illustrated) which is moved away from the dispensing reel 19 at the end of the dispensing of the semi-finished product "S". The service reel 20 is adapted to receive the service tape "N" wound in turns around the winding axis thereof starting from the free end N1 (figure 12) which is made integral with the service reel 20 (figure 13).

Preferably the service reel 20 remains stably associated with the carousel 14. In other words, the service reel 20 is not replaced in the normal operation of the feeding station 10 so that its winding axis stably coincides with the mounting axis C2.

The dispensing reel 19 is removable from the carousel 14 so that it does not remain stably associated with the carousel 14. In other words, a "full" dispensing reel 19 is mounted on the carousel 14 with winding axis coinciding with the mounting axis C1. In addition, an "empty" dispensing reel 19, i.e. from which the entire length of the semi-finished product "S" has been dispensed, is moved away from the carousel 14 in order to be replaced with a "full" dispensing reel 19.

The second access 11b allows the access to the loading/unloading station 10b in order to remove an "empty" dispensing reel 19 and replace it with a "full" dispensing reel 19. In the loading/unloading operation, the dispensing reel 19 is moved perpendicular to the winding axis C1 thereof, i.e. according to a radial direction with respect to the dispensing reel itself. Preferably, in the loading/unloading operation, the dispensing reel 19 being replaced rotates-translates on the lateral containment flanges 19b along the track 12. Preferably the operating unit comprises a thrust member 12a, e.g. a cylinder (figure 9) positionable and actuatable so as to push an "empty" dispensing reel 19 towards the second access 11b. Preferably the loading/unloading of the dispensing reel 19 occurs at a loading/unloading sector CS (figure 11) of the operating unit which, when the operating unit is situated in the loading/unloading station 10b, is directed on the side opposite the dispensing apparatus 200 and which, when the operating unit is situated in the work station 10a, is directed towards the dispensing apparatus 200. In other words, the loading/unloading sector CS of the operating unit corresponds, when the operating unit is arranged in the work station 10a, to the sector through which the semi-finished product "S" is fed and which is traversed by a feeding path "A" of the semi-finished product "S" separated from the service tape "N" directed to the dispensing apparatus 200.

In use, the dispensing reel 19 and the service reel 20 have a respective maximum overall radius R1, R2 (figures 14, 17, 18) which corresponds to the largest from among the radius of the respective lateral containment flanges 19b, 20b and the outer or maximum radius when the reel is "full". In other words, the maximum overall radius corresponds to the radius of the lateral containment flanges if they are present and if, in the course of the operation of the feeding station 10, the content of the reel is not enlarged beyond the flanges themselves.

Respective maximum overall diameters, not indicated, correspond to the double of each maximum overall radius R1, R2.

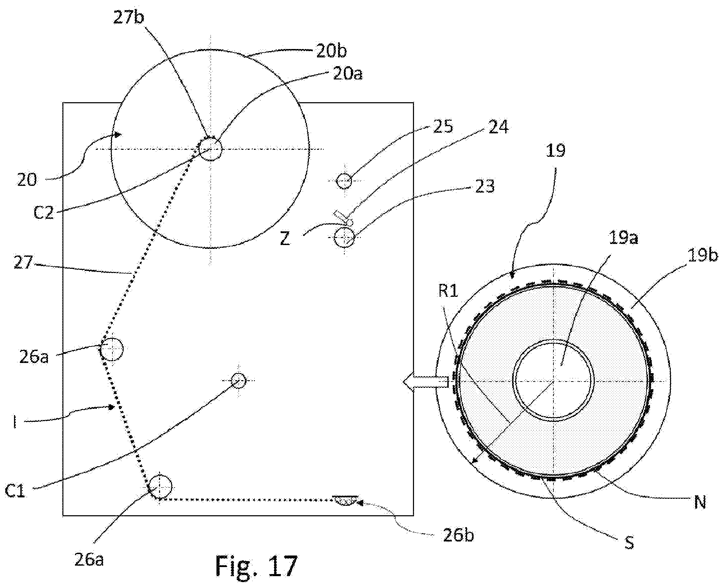

Illustrated in figure 17 is the maximum overall radius R1 of the dispensing reel 19 which, in this case, corresponds to the radius of the lateral containment flanges 19b. The maximum overall radius R2 of the service reel 20 is illustrated in figure 14 with reference to the radius of the lateral containment flanges 20b and in figure 18 with reference to the maximum radius of the "full" service reel 20 i.e. with reference to the maximum radius of the service tape "N" wound on the service reel which is greater than the radius of the lateral containment flanges 20b.

Preferably the respective mounting axes C1, C2 of the dispensing reel 19 and of the service reel 20 are arranged in the operating unit consecutively along a direction defined by the axis 15 so that, if the axis 15 is vertical, the service reel 20 and the dispensing reel 19 are arranged consecutively along a vertical direction.

Preferably, in the event in which the axis 15 is vertical, the service reel 20 is arranged above the dispensing reel 19. In other words, the mounting axis C2 of the service reel 20 is arranged above the mounting axis C1 of the dispensing reel 19. Preferably the respective mounting axes C1, C2 of the dispensing reel 19 and of the service reel 20 are arranged such that the overall dimensions of the respective operating unit, perpendicular to the axis 15, is less than the sum of the respective maximum overall diameters. In other words, the dispensing reel 19 and the service reel 20 are arranged in the operating unit with the respective mounting axes C1, C2 aligned along the axis 15 or slightly offset perpendicular to the axis 15, as is for example illustrated in the enclosed figures. The distance D1 (figure 9) between the two mounting axes C1, C2 measured according to a direction perpendicular to the axis 15 is less than each maximum overall radius R1, R2. In other words, the respective mounting axes C1, C2 of the dispensing reel 19 and of the service reel 20 are arranged in the operating unit such that the projection of the distance D2 between the respective mounting axes C1, C2 on a plane containing the mounting axis C2 of the service reel 20 and perpendicular to the axis 15 is smaller than each maximum overall radius R1, R2.

Preferably the segment corresponding to the distance D2 between the respective mounting axes C1, C2 of the dispensing reel 19 and of the service reel 20 is tilted with respect to the axis 15 by an angle β (figure 9) comprised between 0° and 30°, more preferably between 5° and 15°, e.g. 7°.

Preferably the distance D2 between the respective mounting axes C1, C2 of the dispensing reel 19 and of the service reel 20 is smaller than the sum of the respective maximum overall radii R1, R2, in particular when at least the maximum overall radius R2 of the service reel 20 is given by the maximum radius of the service tape "N" wound on the service reel 20, as illustrated in figure 18, so that the service tape "N" wound on the service reel "full" penetrates the lateral containment flanges 19b of the dispensing reel 19 or, more generally, penetrates the space initially occupied by the "full" dispensing reel 19.

Reference number 21 indicates a dispensing motorisation operatively associated with the dispensing reel 19, preferably comprising a brushless motor, and 22 indicates a service motorisation operatively associated with the service reel 20, preferably comprising a brushless motor. The dispensing motorisation 21 and the service motorisation 22 are configured for rotating respectively the dispensing reel 19 and the service reel 20 around the mounting axis C1, C2 thereof.

The position of the dispensing motorisation 21 is preferably adjustable along the direction of the mounting axis C1 in the two senses X1 and X2 (figure 10) in order to allow the substitution of the dispensing reel 19.

The service motorisation 22 is preferably arranged in the service space 18b.

Based on the operating moment and on the use mode of the dispensing motorisation 21 and/or of the service motorisation 22, the semi-finished product "S", the service tape "N" and possibly the further service tape "P" follow respective paths in the operating unit.

In particular, each operating unit is configured such to define a separation point "Z" between the semi-finished product "S", the service tape "N" and possibly the further service tape "P", if present. Starting from the separation point "Z", the semi-finished product "S" separated from the service tape "N" is directed to the dispensing apparatus 200 along the feeding path "A" until the semi-finished product itself is exhausted and the service tape "N" separated from the semi-finished product "S" follows a drawing-in path "I" arranged between the separation point "Z" and the service reel 20.

Preferably the separation point "Z" is defined by a primary transmission roller 23 with which a tensioner element 24 is possibly associated, e.g. a dancer, maintained in position tangent to the primary transmission roller 23. The primary transmission roller 23 and the tensioner element 24 are preferably projectingly mounted on the support framework 18, in particular on the respective panel 18a.

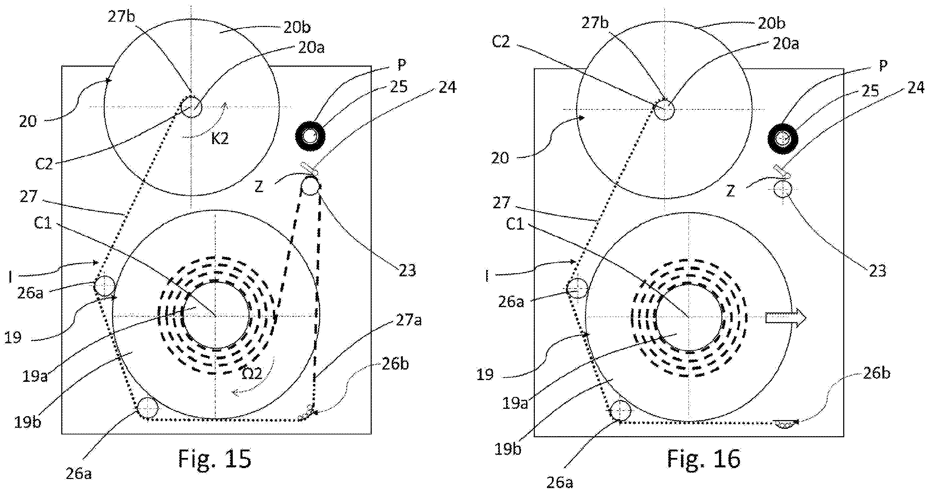

In the event in which the further service tape "P" is present, each operating unit comprises a collection roller 25 mounted rotating on the carousel 14, preferably projectingly on the support framework 18, in particular on the respective panel 18a. In this case, starting from the separation point "Z", the further service tape "P" is directed towards the collection roller 25. Preferably the drawing-in path "I" of the service tape "N" is defined by deflections, e.g. attained by means of one or more secondary transmission rollers 26a (in the illustrated example, two secondary transmission rollers 26a are provided for) and possibly a transmission dancer 26b. Preferably the transmission dancer 26b is configured for carrying out further functions in addition to that of transmission. For example, the transmission dancer 26b is associated with a tension sensor 26c (figure 9) for monitoring and controlling the tension of the service tape "N". In the event in which it is arranged along the loading/unloading path of the dispensing reel 19 (e.g. along the track 12), the transmission dancer 26b can also be movable between an active position (figures 12-15) in which it operates as transmission and a passive position (figures 16-17) in which it allows the loading/unloading of the dispensing reel 19.

Preferably, the drawing-in path "I" and hence the deflections circumferentially surround at least one portion of the dispensing reel 19.

Preferably the drawing-in path "I" at least partially surrounds the dispensing reel 19, e.g. below and laterally with respect thereto. In other words, the deflections are arranged partially around the dispensing reel 19, preferably below and laterally with respect thereto.

Preferably the deflections surround the dispensing reel 19 on circumferentially opposite side with respect to the loading/unloading sector CS.

Preferably, the drawing-in path "I" is at least partially contrary to the feeding path "A" of the semi-finished product "S". In particular, at least one of the deflections, for example the transmission dancer 26b, defines a point of reversal of the drawing-in path "I" with respect to the feeding path "A" (figure 13).

Preferably, the operating unit comprises a driving segment 27 (in fine hatching in figures 12-13, 15-17) in order to guide the first end N1 of the service tape "N" along the drawing-in path "I". The driving segment 27 has a first free end 27a and a second end 27b stably associated with the service reel 20. The first end 27a is adapted to be connected to the first free end N1 of the service tape "N" in order to guide it along the drawing-in path "I".

The driving segment 27, at least in a static condition of the respective operating unit, is arranged around the deflections and hence at least partially defines the drawing-in path "I". Hereinbelow, the plant 100 (figure 1) will be described which, as described above, comprises a plurality of building stations 101. Preferably the plant 100, as is for example illustrated in figure 1, comprises a first step building line 102 configured for building carcass structures, a second step building line 103 configured for building crown structures and an assembly station 104 at which a crown structure is coupled to the carcass structure in order to form a tyre 1 which is finally transferred to a moulding and vulcanisation unit (not illustrated).

The plant 100 also comprises a plurality of drums, in which each drum is movable between at least several of the building stations 101 and constitutes a forming support for a tyre being processed. With reference to a plant 100 made according to the example of figure 1, the plurality of drums comprises forming drums 105 associated with the first step building line 102 and movable between the building stations 101 of the first step building line 102, supporting a carcass structure being processed. In addition, the plurality of drums comprises auxiliary drums 106 associated with the second step building line 103 and movable between the building stations 101 of the second step building line 103, supporting a crown structure being processed. The plurality of building stations 101 comprises at least one forming station configured for forming the respective component of the tyre by means of deposition of the semi-finished product "S" on a surface radially external to a drum of the plurality of drums. Such forming station comprises the dispensing apparatus 200.

The first step building line 102 is configured for building, on each forming drum 105, a carcass structure comprising at least one carcass ply (preferably the first carcass ply 3a and the second carcass ply 3b) and the anchoring annular structures 5. Preferably, as illustrated for example in figure 1, the first step building line 102 is configured for building, on each forming drum 105, a carcass structure comprising the self-sealing layer 2, the first carcass ply 3a, the second carcass ply 3b, the liner 4 and the anchoring annular structures 5. Possibly the first step building line 102 can be configured for building carcass structures also comprising other components, e.g. complex (comprising liners, under-liners and anti-abrasive inserts), under-liners, anti-abrasive inserts, under-belt inserts, reinforcements, at least one portion of the sidewalls 9 or the sidewalls 9 themselves.

Preferably each component among those listed above (self-sealing layer, carcass ply/plies, anchoring annular structures, liner, under-liner, anti-abrasive insert, under-belt inserts, reinforcements, sidewalls or a portion thereof) is formed in a respective forming station of the first step building line 102.

In the example of figure 1, the first step building line 102 comprises six building stations 101 respectively:
a forming station 107 configured for forming the self-sealing layer 2,
a forming station 108 configured for forming the liner 4, a forming station 109 configured for forming the first carcass ply 3a,
a forming station 110 configured for forming the second carcass ply 3b,
a forming station 111 configured for forming the beads "T" by positioning the anchoring annular structures 5 and turning up the end flaps of the carcass plies, and
a rolling station 112 configured for rolling the turn-ups.

The plant 100 illustrated in figure 1 is therefore set for building the carcass structure of the tyre 1 illustrated in figure 2.

At least one forming station of the first step building line 102 is configured for depositing a respective semi-finished product "S" on a surface radially external to a forming drum 105 in order to form the respective component of the tyre. The feeding station 10 is associable with any one of these forming stations of the first step building line 102, preferably with the forming station 107 configured for forming the self-sealing layer 2.

The second step building line 103 is configured for building, on each auxiliary drum 106, a crown structure or outer sleeve comprising the belt structure 6, the tread band 7 and possibly further components such as under-belt inserts 8, reinforcements, at least one portion of the sidewalls 9 or the sidewalls 9 themselves, if not already provided for in the building of the carcass structure. By way of example, with reference to the plant illustrated in figure 1, the second step building line 103 comprises four building stations 101, respectively:
a forming station 113 configured for forming a first belt layer 6a,
a forming station 114 configured for forming a second belt layer 6b,
a forming station 115 configured for forming the tread band 7,
a forming station 116 configured for forming at least one portion of the sidewalls 9.

At least one forming station of the second step building line 103 can be configured for depositing a respective semi-finished product "S" on a surface radially external to an auxiliary drum 106 in order to form the respective component of the tyre. The feeding station 10 is associable with any one of these forming stations of the second step building line 103.

Preferably, the first step building line 102 comprises a primary building line 102a and a completion building line 102b.

The primary building line 102a is configured for building a carcass portion comprising at least one carcass ply (preferably the first carcass ply 3a and the second carcass ply 3b). In other words, the primary building line 102a comprises at least the forming station 109, preferably also the forming station 110. Still more preferably the primary building line 102a is configured for building a carcass portion further comprising one or more from among self-sealing layer, complex, liner, under-liner, anti-abrasive inserts, under-belt inserts, reinforcements, sidewalls or a portion thereof and comprises the corresponding forming stations. In the example of figure 1, the primary building line 102a comprises four building stations 101, respectively:
the forming station 107 configured for forming the self-sealing layer 2,
the forming station 108 configured for forming the liner 4, or the complex,
the forming station 109 configured for forming the first carcass ply 3a,
the forming station 110 configured for forming the second carcass ply 3b.

At least one forming station of the primary building line 102a, preferably all the forming stations of the primary building line 102a, is configured for depositing a respective semi-finished product "S" on a surface radially external to a forming drum 105 in order to form the respective component of the tyre. The feeding station 10 is associable with any one of these forming stations of the primary building line 102a, preferably with the forming station 107 configured for forming the self-sealing layer 2.

The completion building line 102b is configured for completing the building of the carcass structure, for example by applying the anchoring annular structures 5 to the carcass portion and forming the beads "T". In the example of figure 1, the completion building line 102b comprises two building stations 101 respectively:
the forming station 111 configured for forming the beads "T" by means of positioning the anchoring annular structures 5 and turning up the end flaps of the carcass plies, and
the rolling station 112 configured for rolling the turn-ups.
Preferably, the primary building line 102a is extended according to a deposition line "L" that is preferably rectilinear. For example, the deposition line "L" is made by means of a guide 117. With the term "deposition line" it is intended an open path, i.e. not closed circle, which is extended between a first end and a second end.

A shuttle 118 is movable along the deposition line "L", moved by a suitable motor in both travel senses L1, L2. Preferably the shuttle 118 is mounted on the guide 117 defining the deposition line and is movable therealong in both travel senses L1, L2.

The shuttle 118 is capable of supporting one forming drum 105 at a time and rotating it around a rotation axis "X" coinciding with the longitudinal symmetry axis of the drum itself and with the rotation axis of the tyre 1 being processed. In the illustrated embodiment, the forming drum 105 is projectingly carried by the shuttle 118, which comprises a grip element capable of retaining or releasing a terminal end of a central shaft of the forming drum 105.

The building stations 101 of the primary building line 102a are arranged along the deposition line "L" and preferably, according to that illustrated in figure 1, on only one side of the same. In addition, the building stations 101 of the primary building line 102a can be arranged along the deposition line "L" according to an order different from that of building.

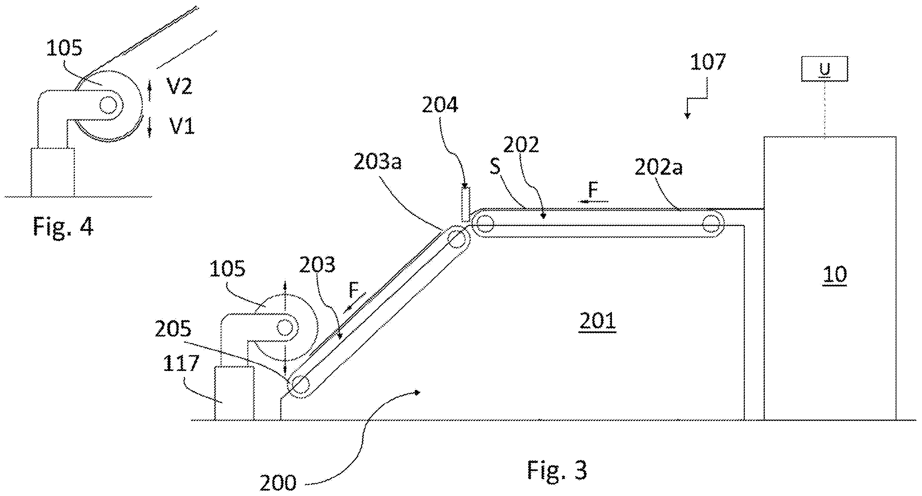

Figures 3 and 4 illustrate a possible embodiment of a forming station configured for forming the respective component of the tyre by means of deposition of a semi-finished product "S" on a surface radially external to a drum of the plurality of drums. In the case illustrated in figures 3 and 4 and in the following description, reference is made to the forming station 107 configured for forming the self-sealing layer 2, but the described characteristics are applicable to any forming station of the plant 100, with reference to the respective component and to a forming drum 105 in the case of a forming station of the first step building line 102 or to an auxiliary drum 106 in the case of a forming station of the second step building line 103.

The forming station 107 comprises the dispensing apparatus 200 with which the feeding station 10 is operatively associated. The dispensing apparatus 200 is configured for depositing the semi-finished product "S" on a surface radially external to a forming drum 105 in order to form the self-sealing layer 2 of the tyre. The dispensing apparatus 200 comprises a frame 201 on which a first conveyor belt 202 is positioned which has a horizontal first upper transport surface 202a. Such upper transport surface 202a is advanced along a feeding direction "F". Downstream of the conveyor belt 202, with respect to the abovementioned feeding direction "F", a second conveyor belt 203 is consecutively arranged which has a second upper transport surface 203a tilted downward starting from the first conveyor belt 202. Such second upper transport surface 203a is advanced along the feeding direction "F". The first upper transport surface 202a and the second upper transport surface 203a define an overall transport surface for a semi-finished product "S" coming from the feeding station 10 and which is extended starting from a rear portion of the dispensing apparatus 200 and terminates at the guide 117 in the case of the first step building line 102. In a plan view (figure 1), the feeding direction "F" is perpendicular to the abovementioned guide 117.

The semi-finished product "S" is unwound from the dispensing reel 19 and separated from the service tape "N". The service tape "N" is wound on the service reel 20 and the further service tape "P" if present, is wound on the collection roller 25. The semi-finished product "S" forms a festoon and then is guided and directed from bottom to top up to the upper transport surface 202a.

Above the conveyor belts 202, 203, a cutting device 204 is preferably positioned for cutting to size the semi-finished product "S" fed onto the transport surface. The cutting device 204 schematically illustrated in figure 3 is placed between the first and the second conveyor belt 202, 203.

A terminal end 205 of the second conveyor belt 203 is positioned close to the guide 117 such that the shuttle 118 and the forming drum 105 carried thereby can be arranged above a terminal end of the overall transport surface. The shuttle 118, being moved along the guide 117, is capable of carrying the forming drum 105 above each of the overall transport surfaces of each dispensing station 107, 108, 109, 110 and to stop it in that position.

In an alternative embodiment illustrated in figure 4, the terminal end 205 of the second conveyor belt 203 is arranged above the forming drum 105, for example for the deposition of the self-sealing layer.

The shuttle 118 also comprises movement devices, not illustrated, adapted to vertically move in two senses V1, V2, along a direction orthogonal to a longitudinal extension of the guide 117, the grip element and the forming drum 105 constrained thereto or alternatively the second conveyor belt 203 and hence its terminal end 205. The forming drum 105 is therefore movable between a first approach position of a radially external surface thereof to the overall transport surface and a second position moved away from the overall transport surface or alternatively the second conveyor belt 203 is movable between a first approach position of the terminal end 205 thereof to the radially outer surface of the forming drum 105 and a second position moved away from aforesaid radially outer surface of the forming drum 105.

The feeding direction "F" of the semi-finished product "S" is perpendicular to a plane containing the rotation axis "X" in the winding point on the forming drum 105.

At one of the terminal ends of the guide 117, a loading and unloading station is situated where, due to suitable non-illustrated devices, each forming drum 105 can be loaded on the shuttle 118 or unloaded from the same.

In the feeding station 10, a method is implemented for feeding a semi-finished product for building a component of a tyre, and overall in the plant 100, a method is implemented for building tyres for vehicle wheels.

"U" indicates a control unit of the feeding station 10 and/or of the plant 100 programmed for carrying out at least several actions of the aforesaid methods.

With reference to the feeding station 10, provision is made for carrying out a feeding procedure in the operating unit located in the work station 10a and a loading/unloading procedure in the operating unit located in the loading/unloading station 10b. The control unit "U" is operatively connected at least to the dispensing motorisation 21 and to the service motorisation 22 in order to carry out the feeding procedure and the loading/unloading procedure.

Considering as initial situation that illustrated in figure 11, the operating unit indicated with reference number 14a is arranged in the work station 10a and comprises a "full" dispensing reel 19 while the operating unit indicated with the reference number 14b is arranged in the loading/unloading station 10b with the respective dispensing reel 19 being replaced (in figure 11, an "empty" dispensing reel 19 is illustrated which is unloaded from the operating unit 14b and in figure 17 a "full" dispensing reel 19 is generically illustrated that is loaded in the respective operating unit).

Hereinbelow, the feeding procedure and the loading/unloading procedure will be described with reference to a full operation condition, i.e. when a feeding procedure and a loading/unloading procedure were previously carried out on the operating units with positions reversed.

The feeding procedure in the operating unit 14a arranged in the work station 10a provides for:
- unwinding from the dispensing reel 19, the semi-finished product "S", the service tape "N" and possibly the further service tape "P", if present (figures 12-13),
- separating the semi-finished product "S" being unwound from the service tape "N" being unwound and possibly from the further service tape "P", if present (figure 13),
- directing the semi-finished product "S" separated from the service tape "N" along a feeding path "A" towards the respective dispensing apparatus 200 until the semi-finished product "S" wound on the dispensing reel 19 (figure 14 or figure 18) is exhausted,
- accumulating the service tape "N" separated from the semi-finished product "S" by winding it on the service reel 20 until the semi-finished product "S" wound on the dispensing reel 19 (figure 14 or figure 18) is exhausted.

The unwinding of the semi-finished product "S" and of the service tape "N" from the dispensing reel 19 provides for imposing, on the dispensing reel 19, a dispensing rotation Ω1 around the mounting axis C1 thereof. In addition, the accumulation of the service tape "N" on the service reel 20 provides for imposing, on the service reel 20, a winding rotation K1 around the mounting axis C2 thereof (figures 12-14 and 18). Preferably the dispensing rotation Ω1 and the winding rotation K1 are generated by the service motorisation 22 which, by rotating the service reel 20, drives the dispensing reel 19. Still more preferably the dispensing rotation Ω1 and the winding rotation K1 are generated by the service motorisation 22 while the dispensing motorisation 21 operates as control brake. During the accumulation of the service tape "N" on the service reel 20, i.e. during the winding rotation K1, is preferably provided for monitoring the length of service tape "N" accumulated on the service reel 20 and, at the end of the winding rotation K1, recording an overall length of service tape "N" accumulated. The monitoring of the length of service tape "N" is preferably carried out by means of encoder of the service motorisation 22 and/or of the dispensing motorisation 21.

The control unit "U" is operatively connected to the dispensing motorisation 21 and to the service motorisation 22 and is programmed for actuating them according to that described above.

In order to accumulate the service tape "N" separated from the semi-finished product, provision is preferably made for connecting the first free end N1 of the service tape to the first free end 27a of the driving segment 27 and winding on the service reel 20 the driving segment 27 and, then, the service tape "N". In order to facilitate such operation, it is preferably provided to be able to access the work station 10a by means of the first access 11a.

The loading/unloading procedure in the operating unit 14b arranged in the loading/unloading station 10b provides for
- unloading, from the operating unit 14b, the service tape "N" separated from the semi-finished product "S" in the preceding feeding procedure,
- unloading, from the operating unit 14b, at least the empty dispensing reel 19,
- loading on the operating unit 14b a "full" dispensing reel 19.

At the end of the feeding procedure, provision is preferably made for rewinding, on the dispensing reel 19, the service tape "N" accumulated on the service reel 20 (figure 15). Therefore, in this case the loading/unloading procedure provides for unloading, from the operating unit 14b, the dispensing reel 19 around which the service tape "N" was rewound that was separated from the semi-finished product in a preceding feeding procedure (figure 16).

Preferably the rewinding occurs at least partially while the carousel 14 rotates in order to reverse the positions of the operating units and/or at least partially in the loading/unloading station 10b and/or at least partially in the work station 10a.

The rewinding on the dispensing reel 19 of the accumulated service tape "N" provides for imposing, on the dispensing reel 19, a rewinding rotation Ω2 contrary to the dispensing rotation Ω1 and imposing, on the service reel, an unwinding rotation K2 contrary to the winding rotation K1 (figure 15).

Preferably the rewinding rotation Ω2 and the unwinding rotation K2 are generated by the dispensing motorisation 21 which, by rotating the dispensing reel 19, drives the service reel 20. Still more preferably the rewinding rotation Ω2 and the unwinding rotation K2 are generated by the dispensing motorisation 21 while the service motorisation 22 operates as control brake. During the rewinding of the service tape N on the dispensing reel 19, i.e. during the rewinding rotation Ω2, provision is preferably made for monitoring the length of service tape N rewound on the dispensing reel 19 and, upon reaching the overall length of service tape recorded during the winding rotation K1 on the dispensing reel, stopping the rewinding rotation Ω2. The monitoring of the length is preferably carried out by means of encoder of the service motorisation 22 and/or of the dispensing motorisation 21.

The control unit "U" is operatively connected to the dispensing motorisation 21 and to the service motorisation 22 and is programmed for actuating them according to that described above.

Preferably, the unwinding rotation K2 of the service reel 20 is contrary to the rewinding rotation Ω2 of the dispensing reel 19. Preferably, the winding rotation K1 of the service reel 20 is contrary to the dispensing rotation Ω1 of the dispensing reel 19. Preferably provision is made for monitoring and controlling the tension of the service tape "N" while it is wound on the service reel 20 or rewound on the dispensing reel 19, for example by means of the transmission dancer 26b associated with the tension sensor 26c and with the control unit "U" (figure 9) suitably programmed for monitoring and controlling the tension of the service tape "N" by acting on the angular position of the transmission dancer 26b.

At the end of each feeding and loading/unloading procedure, provision is made for rotating the carousel 14 around the axis 15 so as to reverse the position of the two operating units 14a, 14b and provision is made for repeating the feeding procedure in the operating unit located in the work station 10a and the loading/unloading procedure in the operating unit located in the loading/unloading station 10b. According to the above-illustrated example, at the end of the feeding procedure carried out on the operating unit 14a arranged in the work station 10a and at the end of the loading/unloading procedure carried out on the operating unit 14b arranged in the loading/unloading station 10b as illustrated in figure 11, the carousel 14 rotates 180° around the axis 15 in order to repeat the feeding procedure in the operating unit 14b which comes to be situated in the work station 10a and the loading/unloading procedure in the operating unit 14a which comes to be situated in the loading/unloading station 10b.

The control unit "U", programmed for such purpose, is operatively connected to the first motorisation "M" in order to impose a rotation on the carousel 14 around the axis 15, preferably a 180° rotation.

Figures 12-18 illustrate in any one operating unit the feeding procedure (figures 12-14 and 18), the rewinding of the service tape "N" (figure 15) and the loading/unloading procedure (figure 16 and 17).

Figures 12-18 referring to a same operating unit, this is a sequence of actions in which the rotation of the carousel is inserted before/during/after the rewinding of the service tape "N" illustrated in figure 15.

Figures 12-18 referring to two different operating units, in the example described starting from the condition of figure 11, figures 12-14 (possibly 12, 13 and 18) illustrate the feeding procedure carried out in the operating unit 14a arranged in the work station 10a at least partially simultaneously with the loading/unloading procedure carried out in the operating unit 14b arranged in the loading/unloading station 10b and illustrated in figures 16 and 17. The rewinding of the service tape "N" illustrated in figure 15 can be referred to the operating unit 14a, at the end of the feeding procedure, or to the operating unit 14b before the loading/unloading procedure.

## Claims

1. Method for feeding a semi-finished product (S) for building a component of a tyre (1) comprising:
- arranging a carousel (14) rotating around an axis (15) arranged centrally between a work station (10a) and a loading/unloading station (10b), wherein said carousel (14) is divided into two operating units (14a, 14b) so that while one operating unit is arranged in the work station (10a) the other operating unit is arranged in the loading/unloading station (10b), each operating unit (14a, 14b) comprising a dispensing reel (19) and a service reel (20) rotatable around respective mounting axes (C1, C2),
- carrying out, at least partially simultaneously, a feeding procedure in the operating unit (14a) located in the work station (10a) and a loading/unloading procedure in the operating unit (14b) located in the loading/unloading station (10b),
- at the end of each feeding and loading/unloading procedure, rotating said carousel (14) around said axis (15) so as to reverse the position of said two operating units (14a, 14b) and, at the end of the rotation, repeating the feeding procedure in the operating unit (14b) located in the work station (10a) and the loading/unloading procedure in the operating unit (14a) located in the loading/unloading station (10b).

2. Method according to claim 1, wherein said feeding procedure comprises:
- unwinding from the full dispensing reel (19) a semi-finished product (S) and a service tape (N), said semi-finished product (S) and said service tape (N) being wound on the dispensing reel (19) so that a turn of service tape (N) is radially interposed between two consecutive turns of semi-finished product (S),
- separating the semi-finished product (S) being unwound from the service tape (N) being unwound,
- directing the semi-finished product (S) separated from the service tape (N) along a feeding path (A) until the semi-finished product (S) wound on said dispensing reel (19) is exhausted,
- accumulating the service tape (N) separated from the semi-finished product (S) by winding it on the service reel (20) until the semi-finished product (S) wound on said dispensing reel (19) is exhausted.

3. Method according to claim 1 or 2, wherein said loading/unloading procedure comprises:
- unloading from the operating unit (14a, 14b), located in the loading/unloading station (10b), a service tape (N) separated from the semi-finished product (S) in a preceding feeding procedure carried out when the operating unit was in the work station (10a),
- unloading from the operating unit (14a, 14b) located in the loading/unloading station (10b) an empty dispensing reel (19) following a preceding feeding procedure carried out when the operating unit was in the work station (10a),
- loading into the operating unit located in the loading/unloading station (14a, 14b) a full dispensing reel (19) around which a semi-finished product (S) is wound with the interposition of a service tape (N), whereby a turn of service tape is radially interposed between two consecutive turns of semi-finished product (S).

4. Method according to claim 3, comprising directing the semi-finished product (S) separated from the service tape (N) along the feeding path (A) through a sector of the operating unit which, when the operating unit is arranged in the loading/unloading station (10b) corresponds to a loading/unloading sector (CS) of the dispensing reel (19) being replaced.

5. Method according to claim 3 or 4, comprising, at the end of the feeding procedure, rewinding onto said empty dispensing reel (19) the service tape (N) accumulated.

6. Method according to claim 5, wherein said loading/unloading procedure comprises unloading from the operating unit said empty dispensing reel (19) around which the service tape (N) separated from the semi-finished product (S) has been rewound in a preceding feeding procedure carried out when the operating unit was in the work station (10a).

7. Method according to claim 5, wherein unwinding said semi-finished product (S) and said service tape (N) from said dispensing reel (19) comprises imposing on said dispensing reel (19) a dispensing rotation (Ω1) around its own mounting axis (C1), and wherein rewinding said accumulated service tape (N) on said dispensing reel (19) comprises imposing a rewinding rotation (Ω2) on said dispensing reel (19) contrary to the dispensing rotation (Ω1).

8. Method according to claim 5, wherein accumulating said service tape (N) comprises imposing on said service reel (20) a winding rotation (K1) around a mounting axis (C2) thereof and wherein rewinding said accumulated service tape (N) onto said dispensing reel (19) comprises imposing an unwinding rotation (K2) on said service reel (20) contrary to the winding rotation (K1).

9. Method according to claim 8, comprising monitoring the length of service tape (N) accumulated on the service reel (20) during the winding rotation (K1), recording an overall length of service tape (N) accumulated at the end of the winding rotation (K1), monitoring the length of service tape (N) rewound on the dispensing reel (19) during the rewinding rotation (Ω2), stopping the rewinding rotation (Ω2) upon reaching, on said dispensing reel (19), said overall length of service tape.

10. Method for building tyres (1) for vehicle wheel, comprising:
- arranging a plurality of building stations (101) and a plurality of drums,
- moving each drum of said plurality of drums between at least some building stations of said plurality of building stations (101),
- carrying out in each building station (101) a processing on a tyre being processed associated with a drum of said plurality of drums until the tyre (1) is completed, wherein at least one processing comprises feeding a semi-finished product (S) according to the method of one or more of the preceding claims and depositing said semi-finished product (S) on a surface radially external to the drum at at least one forming station of said plurality of building stations (101).

11. Feeding station (10) for building a component of a tyre comprising: a carousel (14) rotating around an axis (15) arranged centrally between a work station (10a) and a loading/unloading station (10b) of the feeding station (10), wherein said carousel (14) is divided into two operating units (14a, 14b) so that while one operating unit is arranged in the work station (10a) the other operating unit is arranged in the loading/unloading station (10b), each operating unit (14a, 14b) comprising a dispensing reel (19) and a service reel (20) rotatable around respective mounting axes (C1, C2),
and wherein said feeding station (10) comprises a control unit (U) programmed for:
- carrying out a feeding procedure in the operating unit (14a) located in the work station (10a) and a loading/unloading procedure in the operating unit (14b) located in the loading/unloading station (10b),
- at the end of the feeding procedure and of the loading/unloading procedure, rotating said carousel (14) around said axis (15) so as to reverse the positions of said two operating units (14a, 14b) and, at the end of the rotation, repeating the feeding procedure in the operating unit (14b) located in the work station (10a) and the loading/unloading procedure in the operating unit (14a) located in the loading/unloading station (10b).

12. Feeding station according to claim 11, wherein said dispensing reel (19) and said service reel (20) have, in use, a respective maximum overall diameter and the respective mounting axes (C1, C2) are arranged so that the overall dimensions of the operating unit (14a, 14b) perpendicular to the axis (15) is less than the sum of the maximum overall diameters of said service reel (20) and of said dispensing reel (19).

13. Feeding station according to claim 11 or 12, wherein the respective mounting axes (C1, C2) of the dispensing reel (19) and the service reel (20) are aligned along the axis (15) or slightly offset perpendicularly to the axis (15).

14. Feeding station according to one or more of claims 11 to 13, wherein said service reel (20) is stably associated with said carousel (14).

15. Plant for building tyres for vehicle wheels, comprising:
a plurality of building stations (101) and a plurality of drums, wherein each drum of said plurality of drums is movable between at least some building stations of said plurality of building stations (101),
wherein said plurality of building stations (101) comprises at least one forming station configured to form a component of the tyre, said at least one forming station comprising a feeding station (10) according to one or more of claims 11 to 14 and a dispensing apparatus (200) to which said feeding station (10) is operatively associated, wherein said dispensing apparatus (200) is configured to receive a semi-finished product (S) from the feeding station (10) and to deposit said semi-finished product (S) on a surface radially external to a drum of said plurality of drums for forming said component of the tyre.

## Patentansprüche

1. Verfahren zum Zuführen eines halbfertigen Produkts (S) zur Herstellung einer Komponente eines Reifens (1), umfassend:
- Anordnen eines Karussells (14), das sich um eine Achse (15) dreht, die mittig zwischen einer Bearbeitungsstation (10a) und einer Lade-/Entladestation (10b) angeordnet ist, wobei das Karussell (14) in zwei Betriebseinheiten (14a, 14b) unterteilt ist, sodass, während eine Betriebseinheit in der Bearbeitungsstation (10a) angeordnet ist, die andere Betriebseinheit in der Lade-/Entladestation (10b) angeordnet ist, wobei jede Betriebseinheit (14a, 14b) eine Ausgabespule (19) und eine Versorgungsspule (20) umfasst, die um jeweilige Montageachsen (C1, C2) drehbar sind,
- Durchführen, mindestens teilweise gleichzeitig, eines Zuführvorgangs in der Betriebseinheit (14a), die sich in der Bearbeitungsstation (10a) befindet, und eines Lade-/Entladevorgangs in der Betriebseinheit (14b), die sich in der Lade-/Entladestation (10b) befindet,
- am Ende jedes Zuführ- und Lade-/Entladevorgangs, Drehen des Karussells (14) um die Achse (15), um die Position der zwei Betriebseinheiten (14a, 14b) umzukehren, und, am Ende der Drehung, Wiederholen des Zuführvorgangs in der Betriebseinheit (14b), die sich in der Bearbeitungsstation (10a) befindet, und des Lade-/Entladevorgangs in der Betriebseinheit (14a), die sich in der Lade-/Entladestation (10b) befindet.

2. Verfahren nach Anspruch 1, wobei der Zuführvorgang umfasst:
- Abwickeln von der vollen Ausgabespule (19) eines halbfertigen Produkts (S) und eines Versorgungsbandes (N), wobei das halbfertige Produkt (S) und das Versorgungsband (N) so auf die Ausgabespule (19) gewickelt werden, dass eine Windung des Versorgungsbandes (N) radial zwischen zwei aufeinanderfolgenden Windungen des halbfertigen Produkts (S) eingefügt ist,
- Trennen des halbfertigen Produkts (S), das abgewickelt wird, von dem Versorgungsband (N), das abgewickelt wird,
- Leiten des von dem Versorgungsband (N) getrennten halbfertigen Produkts (S) entlang eines Zuführwegs (A), bis das auf die Ausgabespule (19) gewickelte halbfertige Produkt (S) verbraucht ist,
- Ansammeln des von dem halbfertigen Produkt (S) getrennten Versorgungsbandes (N), indem es auf die Versorgungsspule (20) gewickelt wird, bis das auf die Ausgabespule (19) gewickelte halbfertige Produkt (S) verbraucht ist.

3. Verfahren nach Anspruch 1 oder 2, wobei der Lade-/Entladevorgang umfasst:
- Entladen aus der Betriebseinheit (14a, 14b), die sich in der Lade-/Entladestation (10b) befindet, eines Versorgungsbandes (N), das in einem vorhergehenden Zuführvorgang von dem halbfertigen Produkt (S) getrennt wurde, der durchgeführt wurde, als die Betriebseinheit in der Bearbeitungsstation (10a) war,
- Entladen aus der Betriebseinheit (14a, 14b), die sich in der Lade-/Entladestation (10b) befindet, einer leeren Ausgabespule (19) nach einem vorhergehenden Zuführvorgang, der durchgeführt wurde, als die Betriebseinheit in der Bearbeitungsstation (10a) war,
- Laden in die Betriebseinheit, die sich in der Lade-/Entladestation (14a, 14b) befindet, einer vollen Ausgabespule (19), auf die ein halbfertiges Produkt (S) unter Einfügung eines Versorgungsbandes (N) gewickelt ist, wobei eine Windung des Versorgungsbandes radial zwischen zwei aufeinanderfolgenden Windungen des halbfertigen Produkts (S) eingefügt ist.

4. Verfahren nach Anspruch 3, umfassend Leiten des halbfertigen Produkts (S), das von dem Versorgungsband (N) getrennt ist, entlang des Zuführwegs (A) durch einen Sektor der Betriebseinheit, der, wenn die Betriebseinheit in der Lade-/Entladestation (10b) angeordnet ist, einem Lade-/Entladesektor (CS) der Ausgabespule (19), die ersetzt wird, entspricht.

5. Verfahren nach Anspruch 3 oder 4, umfassend, am Ende des Zuführvorgangs, Aufwickeln des angesammelten Versorgungsbandes (N) auf die leere Ausgabespule (19).

6. Verfahren nach Anspruch 5, wobei der Lade-/Entladevorgang Entladen, aus der Betriebseinheit, der leeren Ausgabespule (19) umfasst, um die das von dem halbfertigen Produkt (S) getrennte Versorgungsband (N) in einem vorhergehenden Zuführvorgang aufgewickelt wurde, der durchgeführt wurde, als die Betriebseinheit in der Bearbeitungsstation (10a) war.

7. Verfahren nach Anspruch 5, wobei das Abwickeln des halbfertigen Produkts (S) und des Versorgungsbandes (N) von der Ausgabespule (19) das Anlegen einer Ausgabedrehung (Ω1) an die Ausgabespule (19) um ihre eigene Montageachse (C1) umfasst, und wobei das Aufwickeln des angesammelten Versorgungsbandes (N) auf die Ausgabespule (19) das Anlegen einer Aufwickeldrehung (Ω2) an die Ausgabespule (19) gegensätzlich zu der Ausgabedrehung (Ω1) umfasst.

8. Verfahren nach Anspruch 5, wobei das Ansammeln des Versorgungsbandes (N) das Anlegen einer Wickeldrehung (K1) um eine Montageachse (C2) davon an die Versorgungsspule (20) umfasst und wobei Aufwickeln des angesammelten Versorgungsbandes (N) auf die Ausgabespule (19) das Anlegen einer Abwickeldrehung (K2) an die Versorgungsspule (20) gegensätzlich zu der Wickeldrehung (K1) umfasst.

9. Verfahren nach Anspruch 8, umfassend Überwachen der Länge des Versorgungsbandes (N), das auf der Versorgungsspule (20) während der Wickeldrehung (K1) angesammelt wird, Aufzeichnen einer Gesamtlänge des Versorgungsbandes (N), das am Ende der Wickeldrehung (K1) angesammelt wird, Überwachen der Länge des Versorgungsbandes (N), das auf die Ausgabespule (19) während der Aufwickeldrehung (Ω2) aufgewickelt wird, Beenden der Aufwickeldrehung (Ω2), wenn auf der Ausgabespule (19) die Gesamtlänge des Versorgungsbandes erreicht ist.

10. Verfahren zur Herstellung von Reifen (1) für ein Fahrzeugrad, umfassend:
- Anordnen einer Vielzahl von Aufbaustationen (101) und einer Vielzahl von Trommeln,
- Bewegen jeder Trommel der Vielzahl von Trommeln zwischen mindestens einigen Aufbaustationen der Vielzahl von Aufbaustationen (101),
- Durchführen, in jeder Aufbaustation (101), einer Verarbeitung an einem Reifen, der verarbeitet wird, der einer Trommel der Vielzahl von Trommeln zugeordnet ist, bis der Reifen (1) fertiggestellt ist, wobei die mindestens eine Verarbeitung Zuführen eines halbfertigen Produkts (S) nach dem Verfahren nach einem oder mehreren der vorstehenden Ansprüche und Ablegen des halbfertigen Produkts (S) auf einer Oberfläche radial außerhalb der Trommel an mindestens einer Formstation der Vielzahl von Aufbaustationen (101) umfasst.

11. Zuführstation (10) zur Herstellung einer Komponente eines Reifens, umfassend: ein Karussell (14), das sich um eine Achse (15) dreht, die mittig zwischen einer Bearbeitungsstation (10a) und einer Lade-/Entladestation (10b) der Zuführstation (10) angeordnet ist, wobei das Karussell (14) in zwei Betriebseinheiten (14a, 14b) unterteilt ist, sodass, während eine Betriebseinheit in der Bearbeitungsstation (10a) angeordnet ist, die andere Betriebseinheit in der Lade-/Entladestation (10b) angeordnet ist, wobei jede Betriebseinheit (14a, 14b) eine Ausgabespule (19) und eine Versorgungsspule (20) umfasst, die um jeweilige Montageachsen (C1, C2) drehbar sind,
und wobei die Zuführstation (10) eine Steuereinheit (U) umfasst, die programmiert ist zum:
- Durchführen eines Zuführvorgangs in der Betriebseinheit (14a), die sich in der Bearbeitungsstation (10a) befindet, und eines Lade-/Entladevorgangs in der Betriebseinheit (14b), die sich in der Lade-/Entladestation (10b) befindet,
- am Ende des Zuführvorgangs und des Lade-/Entladevorgangs, Drehen des Karussells (14) um die Achse (15), um die Positionen der zwei Betriebseinheiten (14a, 14b) umzukehren, und am Ende der Drehung, Wiederholen des Zuführvorgangs in der Betriebseinheit (14b), die sich in der Bearbeitungsstation (10a) befindet, und des Lade-/Entladevorgangs in der Betriebseinheit (14a), die sich in der Lade-/Entladestation (10b) befindet.

12. Zuführstation nach Anspruch 11, wobei die Ausgabespule (19) und die Versorgungsspule (20) in Verwendung einen jeweiligen maximalen Gesamtdurchmesser aufweisen und die jeweiligen Montageachsen (C1, C2) so angeordnet sind, dass die Gesamtabmessungen der Betriebseinheit (14a, 14b) senkrecht zur Achse (15) kleiner sind als die Summe der maximalen Gesamtdurchmesser der Versorgungsspule (20) und der Ausgabespule (19).

13. Zuführstation nach Anspruch 11 oder 12, wobei die jeweiligen Montageachsen (C1, C2) der Ausgabespule (19) und der Versorgungsspule (20) entlang der Achse (15) oder leicht versetzt senkrecht zur Achse (15) ausgerichtet sind.

14. Zuführstation nach einem oder mehreren der Ansprüche 11 bis 13, wobei die Versorgungsspule (20) dem Karussell (14) fest zugeordnet ist.

15. Anlage zur Herstellung von Reifen für Fahrzeugräder, umfassend:
eine Vielzahl von Aufbaustationen (101) und eine Vielzahl von Trommeln, wobei jede Trommel der Vielzahl von Trommeln zwischen mindestens einigen Aufbaustationen der Vielzahl von Aufbaustationen (101) beweglich ist,
wobei die Vielzahl von Aufbaustationen (101) mindestens eine Formstation umfasst, die dazu konfiguriert ist, eine Komponente des Reifens zu formen, wobei die mindestens eine Formstation eine Zuführstation (10) nach einem oder mehreren der Ansprüche 11 bis 14 und eine Ausgabeeinrichtung (200) umfasst, der die Zuführstation (10) betriebsfähig zugeordnet ist, wobei die Ausgabeeinrichtung (200) dazu konfiguriert ist, ein halbfertiges Produkt (S) von der Zuführstation (10) aufzunehmen und das halbfertige Produkt (S) auf einer Oberfläche radial außerhalb einer Trommel der Vielzahl von Trommeln zum Formen der Komponente des Reifens abzulegen.

## Revendications

1. Procédé d'alimentation d'un produit semi-fini (S) pour la construction d'un composant d'un pneu (1) comprenant :
- l'agencement d'un carrousel (14) tournant autour d'un axe (15) disposé centralement entre un poste de travail (10a) et un poste de chargement/déchargement (10b), dans lequel ledit carrousel (14) est divisé en deux unités d'exploitation (14a, 14b) de sorte que, tandis qu'une unité d'exploitation est disposée dans le poste de travail (10a), l'autre unité d'exploitation est disposée dans le poste de chargement/déchargement (10b), chaque unité d'exploitation (14a, 14b) comprenant une bobine de distribution (19) et une bobine de service (20) pouvant tourner autour d'axes de montage respectifs (C1, C2),
- la réalisation, au moins en partie simultanément, d'une procédure d'alimentation dans l'unité d'exploitation (14a) située dans le poste de travail (10a) et d'une procédure de chargement/déchargement dans l'unité d'exploitation (14b) située dans le poste de chargement/déchargement (10b),
- à la fin de chaque procédure d'alimentation et de chargement/déchargement, la rotation dudit carrousel (14) autour dudit axe (15) de manière à inverser la position desdites deux unités d'exploitation (14a, 14b) et, à la fin de la rotation, la répétition de la procédure d'alimentation dans l'unité d'exploitation (14b) située dans le poste de travail (10a) et de la procédure de chargement/déchargement dans l'unité d'exploitation (14a) située dans le poste de chargement/déchargement (10b).

2. Procédé selon la revendication 1, dans lequel ladite procédure d'alimentation comprend :
- le déroulement à partir de la bobine de distribution pleine (19) d'un produit semi-fini (S) et d'une bande de service (N), ledit produit semi-fini (S) et ladite bande de service (N) étant enroulés sur la bobine de distribution (19) de manière à ce qu'un tour de bande de service (N) soit radialement interposé entre deux tours consécutifs de produit semi-fini (S),
- la séparation du produit semi-fini (S) en cours de déroulement de la bande de service (N) en cours de déroulement,
- le fait de diriger le produit semi-fini (S) séparé de la bande de service (N) le long d'un chemin d'alimentation (A) jusqu'à épuisement du produit semi-fini (S) enroulé sur ladite bobine de distribution (19),
- l'accumulation de la bande de service (N) séparée du produit semi-fini (S) en l'enroulant sur la bobine de service (20) jusqu'à épuisement du produit semi-fini (S) enroulé sur ladite bobine de distribution (19).

3. Procédé selon la revendication 1 ou 2, dans lequel ladite procédure de chargement/déchargement comprend :
- le déchargement de l'unité d'exploitation (14a, 14b), située dans le poste de chargement/déchargement (10b), d'une bande de service (N) séparée du produit semi-fini (S) dans une procédure d'alimentation précédente effectuée lorsque l'unité d'exploitation se trouvait dans le poste de travail (10a),
- le déchargement de l'unité d'exploitation (14a, 14b) située dans le poste de chargement/déchargement (10b) d'une bobine de distribution vide (19) à la suite d'une procédure d'alimentation précédente effectuée lorsque l'unité d'exploitation se trouvait dans le poste de travail (10a),
- le chargement dans l'unité d'exploitation située dans le poste de chargement/déchargement (14a, 14b) d'une bobine de distribution pleine (19) autour de laquelle est enroulé un produit semi-fini (S) avec interposition d'une bande de service (N), selon lequel un tour de bande de service est radialement interposé entre deux tours consécutifs de produit semi-fini (S).

4. Procédé selon la revendication 3, comprenant le fait de diriger le produit semi-fini (S) séparé de la bande de service (N) le long du chemin d'alimentation (A) à travers un secteur de l'unité d'exploitation qui, lorsque l'unité d'exploitation est disposée dans le poste de chargement/déchargement (10b), correspond à un secteur de chargement/déchargement (CS) de la bobine de distribution (19) en cours de remplacement.

5. Procédé selon la revendication 3 ou 4, comprenant, à la fin de la procédure d'alimentation, le rembobinage sur ladite bobine de distribution vide (19) de la bande de service (N) accumulée.

6. Procédé selon la revendication 5, dans lequel ladite procédure de chargement/déchargement comprend le déchargement de l'unité d'exploitation de ladite bobine de distribution vide (19) autour de laquelle la bande de service (N) séparée du produit semi-fini (S) a été rembobinée dans une procédure d'alimentation précédente effectuée lorsque l'unité d'exploitation se trouvait dans le poste de travail (10a).

7. Procédé selon la revendication 5, dans lequel le déroulement dudit produit semi-fini (S) et de ladite bande de service (N) de ladite bobine de distribution (19) comprend l'imposition à ladite bobine de distribution (19) d'une rotation de distribution (Ω1) autour de son propre axe de montage (C1), et dans lequel le rembobinage de ladite bande de service accumulée (N) sur ladite bobine de distribution (19) comprend l'imposition d'une rotation de rembobinage (Ω2) à ladite bobine de distribution (19) contraire à la rotation de distribution (Ω1).

8. Procédé selon la revendication 5, dans lequel l'accumulation de ladite bande de service (N) comprend l'imposition à ladite bobine de service (20) d'une rotation d'enroulement (K1) autour d'un axe de montage (C2) de celle-ci et dans lequel le rembobinage de ladite bande de service accumulée (N) sur ladite bobine de distribution (19) comprend l'imposition d'une rotation de déroulement (K2) à ladite bobine de service (20) contraire à la rotation d'enroulement (K1).

9. Procédé selon la revendication 8, comprenant la surveillance de la longueur de la bande de service (N) accumulée sur la bobine de service (20) pendant la rotation d'enroulement (K1), l'enregistrement d'une longueur globale de la bande de service (N) accumulée à la fin de la rotation d'enroulement (K1), la surveillance de la longueur de la bande de service (N) rembobinée sur la bobine de distribution (19) pendant la rotation de rembobinage (Ω2), l'arrêt de la rotation de rembobinage (Ω2) lorsque ladite longueur globale de la bande de service est atteinte sur ladite bobine de distribution (19).

10. Procédé de construction de pneus (1) pour roues de véhicule, comprenant :
- l'agencement d'une pluralité de postes de construction (101) et d'une pluralité de tambours,
- le déplacement de chaque tambour de ladite pluralité de tambours entre au moins certains postes de construction de ladite pluralité de postes de construction (101),
- la réalisation dans chaque poste de construction (101) d'un traitement sur un pneu en cours de traitement associé à un tambour de ladite pluralité de tambours jusqu'à ce que le pneu (1) soit terminé, dans lequel au moins un traitement comprend l'alimentation d'un produit semi-fini (S) selon le procédé d'une ou plusieurs des revendications précédentes et le dépôt dudit produit semi-fini (S) sur une surface radialement externe au tambour à au moins un poste de formage de ladite pluralité de postes de construction (101).

11. Poste d'alimentation (10) pour la construction d'un composant d'un pneu comprenant : un carrousel (14) tournant autour d'un axe (15) disposé centralement entre un poste de travail (10a) et un poste de chargement/déchargement (10b) du poste d'alimentation (10), dans lequel ledit carrousel (14) est divisé en deux unités d'exploitation (14a, 14b) de sorte que, tandis qu'une unité d'exploitation est disposée dans le poste de travail (10a), l'autre unité d'exploitation est disposée dans le poste de chargement/déchargement (10b), chaque unité d'exploitation (14a, 14b) comprenant une bobine de distribution (19) et une bobine de service (20) pouvant tourner autour d'axes de montage respectifs (C1, C2),
et dans lequel ledit poste d'alimentation (10) comprend une unité de commande (U) programmée pour :
- la réalisation d'une procédure d'alimentation dans l'unité d'exploitation (14a) située dans le poste de travail (10a) et d'une procédure de chargement/déchargement dans l'unité d'exploitation (14b) située dans le poste de chargement/déchargement (10b),
- à la fin de la procédure d'alimentation et de la procédure de chargement/déchargement, la rotation dudit carrousel (14) autour dudit axe (15) de manière à inverser les positions desdites deux unités d'exploitation (14a, 14b) et, à la fin de la rotation, la répétition de la procédure d'alimentation dans l'unité d'exploitation (14b) située dans le poste de travail (10a) et de la procédure de chargement/déchargement dans l'unité d'exploitation (14a) située dans le poste de chargement/déchargement (10b).

12. Poste d'alimentation selon la revendication 11, dans lequel ladite bobine de distribution (19) et ladite bobine de service (20) présentent, en utilisation, un diamètre global maximal respectif et les axes de montage respectifs (C1, C2) sont disposés de sorte que les dimensions globales de l'unité d'exploitation (14a, 14b) perpendiculaire à l'axe (15) soient inférieures à la somme des diamètres globaux maximaux de ladite bobine de service (20) et de ladite bobine de distribution (19).

13. Poste d'alimentation selon la revendication 11 ou 12, dans lequel les axes de montage respectifs (C1, C2) de la bobine de distribution (19) et de la bobine de service (20) sont alignés le long de l'axe (15) ou légèrement décalés perpendiculairement à l'axe (15).

14. Poste d'alimentation selon une ou plusieurs des revendications 11 à 13, dans lequel ladite bobine de service (20) est associée de manière stable audit carrousel (14).

15. Installation de construction de pneus pour roues de véhicule, comprenant :
une pluralité de postes de construction (101) et une pluralité de tambours, dans laquelle chaque tambour de ladite pluralité de tambours est mobile entre au moins certains postes de construction de ladite pluralité de postes de construction (101),
dans laquelle ladite pluralité de postes de construction (101) comprend au moins un poste de formage configuré pour former un composant du pneu, ledit au moins un poste de formage comprenant un poste d'alimentation (10) selon une ou plusieurs des revendications 11 à 14 et un appareil de distribution (200) auquel ledit poste d'alimentation (10) est associé de manière opérationnelle, dans laquelle ledit appareil de distribution (200) est configuré pour recevoir un produit semi-fini (S) en provenance du poste d'alimentation (10) et pour déposer ledit produit semi-fini (S) sur une surface radialement externe à un tambour de ladite pluralité de tambours pour former ledit composant du pneu.
